# EUROPEAN PATENT SPECIFICATION

(11) **EP 3 017 532 B1**
(45) Date of publication and mention of the grant of the patent: **27.02.2019**
(21) Application number: 14734927.8
(22) Date of filing: 27.05.2014
(51) Int. Cl.: H02K 21/22, H02K 7/00, H02K 29/03, H02K 1/27, F02N 11/04

(54) **SYNCHRONOUS DRIVE MOTOR**
MOTOR MIT SYNCHRONANTRIEB
MOTEUR SYNCHRONE

(30) Priority: 14.08.2013 JP 2013168421; 21.04.2014 JP 2014087426
(43) Date of publication of application: 11.05.2016
(73) Proprietor: Yamaha Hatsudoki Kabushiki Kaisha, Iwata-shi, Shizuoka 438-8501 (JP)
(72) Inventor: KOBAYASHI, Takayuki, Iwata-shi Shizuoka 438-8501 (JP); HINO, Haruyoshi, Iwata-shi Shizuoka 438-8501 (JP); NISHIKAWA, Takahiro, Iwata-shi Shizuoka 438-8501 (JP)
(74) Representative: Stöckeler, Ferdinand
(86) International application number: PCT/JP2014/064561
(87) International publication number: WO 2015/022804

(56) References cited:
- EP-A1- 2 348 611
- EP-A2- 1 578 000
- DE-U1- 29 712 973
- JP-A- 2002 233 122
- US-A- 5 642 013
- US-A1- 2005 046 304
- Jacek F. Gieras: "5 Permanent Magnet Synchronous Motors, 5.1 Construction, 5.2 Fundamental Relationships" In: "Permanent magnet motor technology: designs and applications", 1 January 2010 (2010-01-01), CRC Press, Boca Raton, Fla. [u.a.], XP055366916, ISBN: 978-1-4200-6440-7

## Description

### Technical Field

The present invention relates to a synchronous drive motor.

### Background Art

A drive motor is required to have a high torque, a high output, and a small size, all of which should be achieved at a high level. Particularly, the drive motor is most commonly mounted in machinery that is an object to be driven. Therefore, how to achieve a high torque and a high output in spite of the size constraint is an issue.

Each of Patent Literature 1 to 3 discloses a motor that drives a compressor. To achieve a high output, the motors disclosed in the Patent Literature 1 to 3 adopt a configuration in which the number of magnet faces is 2/3 of the number of teeth. A motor configured such that the number of magnet faces is 2/3 of the number of teeth has a low angular velocity ω and a low impedance. This is why the motor configured such that the number of magnet faces is 2/3 of the number of teeth is able to receive a large current supply, which can improve an output of the motor.

In the Patent Literature 1 to 3, a distal end portion of each tooth included in the motor has protruding portions protruding in a circumferential direction. Providing the protruding portions to a tooth can increase the area over which the tooth is opposed to a magnet face, thus increasing the amount of magnetic fluxes received by the tooth. As a result, a torque of the drive motor can be increased.

EP 1 578 000 A2 discloses a motor comprising a stator having a core including a number of stator teeth, and stator slots provided between the teeth. A rotor is arranged surrounding the stator and comprsises a rotor body and permanent magnets provided in the rotor body. The number of stator teeth is smaller than the number of permanent magnets.

US 5 642 013 A discloses a synchronous motor comprising an armature having a plurality of teeth solid with a yoke and spaced apart by slots in which coils are accommodated. An inductor comprising a plurality of magnets is spaced from the armature by an air-grap. The motor is so dimensioned that the teeth of the armature have a constant cross-section over their entire height and the width of the slots alongside the tooth heads is substantially equal to the width of these heads to minimize the parasitic reluctant effect due to the slots.

DE 297 12 973 U1 discloses a motor comprising teeth having a trapezoidal shape.

EP 2 348 611 A1 teaches a rotating electric machine including a stator having a stator coil and a rotor provided rotatably around a specific rotation axis with respect to the stator. The rotor includes a plurality of magnets, a plurality of magnetically-assisted salient pole members provided between poles of any adjacent two magnets from among the plurality of magnets.

Jacek F. Gieras: "5 Permanent Magnet Synchronous Motors, 5.1 Construction, 5.2 Fundamental Relationships" in: "Permanent magnet motor technology: designs and applications", 1 January 2010, CRC Press, Boca Raton, Fla. [u.a.], ISBN: 978-1-4200-6440-7, discloses rotors with buried magnets for synchronous motors.

US 2005/0046304 A1 discloses a motor generator comprising nine stator teeth and ten permanent magnets. A relationship between an effective width d1 of each permanent magnet and the width d2 of the distal end of the stator teeth is set to be d1 ≤ d2.

EP 1 173 163 A1 discloses an interior permanent magnet electric rotating machine with increased output torque by utilising reluctance torque.

### Citation List

### Patent Literature

PTL 1: Japanese Patent Application Laid-Open No. 2007-074898
PTL 2: Japanese Patent Application Laid-Open No. 11-146584 (1999)
PTL 3: Japanese Patent Application Laid-Open No. 2004-135380

### Summary of Invention

### Technical Problem

An object of the present invention is to provide a synchronous drive motor that satisfies a high torque, a high output, and downsizing at a higher level.

### Solution to Problem

To solve the problem described above, the present invention adopts the following configurations.
(1) The subject matter as defined by claim 1.
   The present inventors have conducted intensive studies about achieving both a high output and a high torque while maintaining the size of a synchronous drive motor. In the course of the studies, the present inventors have changed the way of thinking, to overturn two types of common wisdom that those skilled in the art have about a synchronous drive motor, as described in the (i) and (ii) below.
   (i) A synchronous drive motor configured such that the number of magnet faces is 2/3 of the number of teeth has been conventionally used for the reason that, among various types of synchronous drive motors having different ratios of the number of magnet faces to the number of teeth, a motor configured such that the number of magnet faces is 2/3 of the number of teeth has the lowest angular velocity ω. A lower angular velocity ω leads to a lower impedance Z, which allows an increased current to be supplied to the synchronous drive motor. As a result, an output of the synchronous drive motor is improved. An improvement of the output is favorable for the synchronous drive motor. In other words, when the number of magnet faces is more than 2/3 of the number of teeth, the angular velocity ω is high, which results in a reduced output of the synchronous drive motor. This is why setting the number of magnet faces to be more than 2/3 of the number of teeth has been considered unfavorable for the synchronous drive motor. However, the present inventors have overturned this common wisdom and attempted to configure the synchronous drive motor such that the number of magnet faces is more than 2/3 of the number of teeth.
   (ii) Conventionally, a distal end portion of a tooth is provided with a protruding portion protruding in a circumferential direction, for the following reason. A tooth having a protruding portion is able to collect a large amount of magnetic fluxes from a magnet face, which contributes to improvement of a torque. The presence of the protruding portion increases the area over which the distal end portion of the tooth is opposed to the magnet face. This improves a permeance coefficient of a permanent magnet part. For example, reducing the thickness of the permanent magnet part to downsize the synchronous drive motor is allowed. Improvement of a torque is also achieved. This is why increasing the size of the protruding portion of the tooth has been considered favorable for the synchronous drive motor. However, the present inventors have overturned this common wisdom and attempted to reduce the size of the protruding portion of the tooth of the synchronous drive motor.
      The present inventors have attempted to concurrently overturn both the common wisdom that the number of magnet faces is set to be 2/3 of the number of teeth and the common wisdom that the protruding portion of the tooth has an increased size. As a result, the present inventors have discovered that providing a larger number of magnet faces than the number of teeth and setting the circumferential width of the distal end portion of the tooth to be smaller than the sum of the circumferential width of the magnet face and the circumferential width of the distal end surface of the auxiliary yoke part enables a high output and a high torque to be satisfied at a high level even under the condition that, for example, the size of the synchronous drive motor is unchanged.
      The synchronous drive motor of (1) includes a larger number of magnet faces as compared with a synchronous drive motor configured in a conventional manner such that the number of magnet faces is 2/3 of the number of teeth (hereinafter, sometimes referred to simply as a conventional synchronous drive motor). Therefore, in the synchronous drive motor of (1), as compared with the conventional synchronous drive motor whose size is equal to the size of the synchronous drive motor of (1), the magnet face has a smaller circumferential width. In addition, the circumferential width of the distal end portion of the tooth is smaller than the sum of the circumferential width of the magnet face and the circumferential width of the distal end surface of the auxiliary yoke part. In the synchronous drive motor, therefore, a decrease in the circumferential width of the distal end portion of the tooth increases an inter-tooth gap that is an interval between the distal end portions of adjacent teeth with respect to the circumferential direction.
      Normally, when the circumferential width of the distal end portion decreases, the area over which the distal end portion is opposed to the magnet face is reduced, and therefore the amount of interlinkage magnetic fluxes that are inputted from the magnet face to the tooth and interlinked with the winding is reduced. In this respect, in the synchronous drive motor of (1) in which the magnet face has a smaller circumferential width, a reduction in the area over which the distal end portion is opposed to the magnet face is suppressed even when the circumferential width of the distal end portion decreases. Accordingly, a reduction in the interlinkage magnetic fluxes of the winding, which may otherwise be involved in the small circumferential width of the distal end portion of the tooth, is suppressed. Additionally, the large inter-tooth gap causes less magnetic fluxes to leak through the inter-tooth gap. The decrease in the leakage magnetic fluxes enables, for example, an increase in stator magnetic fluxes that are inputted from the tooth to the magnet face. Thus, the synchronous drive motor of (1) is able to obtain a high torque by, for example, increasing the stator magnetic fluxes with suppression of a decrease in the interlinkage magnetic fluxes of the winding.
      In the synchronous drive motor of (1), each of the plurality of auxiliary yoke parts is arranged in the interval between the permanent magnet parts. Therefore, a reluctance torque can be obtained by using an attractive force produced between the auxiliary yoke part and the tooth. The synchronous drive motor of (1) includes the auxiliary yoke parts and accordingly the magnet provided therein has a small size, as compared with the conventional synchronous drive motor whose size is equal to the size of the synchronous drive motor of (1), but nevertheless the synchronous drive motor of (1) is able to enhance a torque due to the reluctance torque. In the synchronous drive motor of (1), as compared with the conventional synchronous drive motor, a larger number of magnet faces are provided, and thus the number of the auxiliary yoke parts is also large. This can provide a high reluctance torque.
      For example, in a case where the circumferential width of the distal end portion of the tooth is larger than the sum of the circumferential width of the magnet face and the circumferential width of the distal end surface of the auxiliary yoke part, when a current flows through a winding along with rotation of the rotor, the auxiliary yoke part is opposed to the tooth wound with the winding. Thus, the auxiliary yoke part is attracted to the tooth to some extent. Therefore, a reluctance torque is low. In the synchronous drive motor of (1), on the other hand, the circumferential width of the distal end portion of the tooth is smaller than the sum of the circumferential width of the magnet face and the circumferential width of a distal end surface of an auxiliary yoke part. This configuration suppresses the degree of opposing between the tooth and the auxiliary yoke part at a time when a current flows through the winding. Therefore, upon flowing of a current, the attractive force attracting the auxiliary yoke part to the tooth causes a strong rotation force. Accordingly, a high reluctance torque is obtained.
      In the synchronous drive motor of (1), furthermore, the inter-tooth gap is large, which dramatically improves the degree of freedom in the design of the winding. Accordingly, for example, the number of turns of the winding can be increased to enhance a torque.
      As thus far described, the synchronous drive motor of (1) is able to enhance a torque by, for example, increasing the stator magnetic fluxes with suppression of a decrease in the interlinkage magnetic fluxes of the winding, using a high reluctance torque, or increasing the number of turns of the winding. Accordingly, the synchronous drive motor of (1) is able to improve a torque as compared with the conventional synchronous drive motor whose size is equal to the size of the synchronous drive motor of (1).
      In the synchronous drive motor of (1), as described above, the inter-tooth gap is large, so that an inductance L is low. Therefore, even when the number of magnet faces is more than the number of teeth so that the angular velocity ω is high, an AC component ωL of impedance can be maintained. As a result, a current supplied to the synchronous drive motor can be ensured. Since the torque is improved as described above, ensuring the current enables improvement of an output. In the synchronous drive motor of (1), as described above, the degree of freedom in the design of the winding is improved. Thus, for example, adopting a wire having a large diameter for the winding is allowed without causing an increase in the size of the synchronous drive motor. This can reduce a resistance R of the winding. Therefore, by increasing the current supplied to the winding, both a torque and an output can be improved. Thus, the synchronous drive motor of (1) is able to improve an output as compared with the conventional synchronous drive motor whose size is equal to the size of the synchronous drive motor of (1). Which of the torque and the output is to be more highly improved is adjustable by, for example, which of the diameter of the winding and the number of turns of the winding is more highly increased.
      In this manner, the synchronous drive motor of (1) is able to improve an output and a torque as compared with the conventional synchronous drive motor whose size is equal to the size of the synchronous drive motor of (1).
      The above description explains that the synchronous drive motor of (1) is able to improve an output and a torque as compared with the conventional synchronous drive motor whose size is equal to the size of the synchronous drive motor of (1). Besides, the synchronous drive motor of (1) achieves downsizing as compared with the conventional synchronous drive motor having the same output and the same torque as those of the synchronous drive motor of (1).
      Thus, in the synchronous drive motor of (1), a high torque, a high output, and downsizing can be satisfied at a high level.

   The configuration in that a gap between the distal end portions of the teeth adjacent to each other with respect to the circumferential direction is larger than the circumferential width of the distal end portion further improves the degree of freedom in the design of the winding. Therefore, for example, further increasing the number of turns of the winding or adopting a wire having a larger diameter for the winding is allowed. Accordingly, a high torque, a high output, and downsizing can be satisfied at a higher level.
(2) The synchronous drive motor according to (1), wherein
   the distal end portion has a smaller circumferential width than the sum of the circumferential width of the magnet face and half the circumferential width of the distal end surface of the auxiliary yoke part, the number of the magnet faces being more than the number of the teeth.
   The configuration of (2) further suppresses the degree of opposing between the tooth and the auxiliary yoke part at a time when a current flows through the winding. Therefore, upon flowing of a current, the attractive force attracting the auxiliary yoke part to the tooth causes a stronger rotation force. Thus, a high reluctance torque is obtained. Accordingly, a high torque, a high output, and downsizing can be satisfied at a higher level.
(3) The synchronous drive motor according to (1), wherein
   the distal end portion has a smaller circumferential width than the circumferential width of the magnet face, the number of the magnet faces being more than the number of the teeth.
   The configuration of (3) further suppresses the degree of opposing between the tooth and the auxiliary yoke part at a time when a current flows through the winding. In the configuration of (3), a state where part of the distal end portion is opposed to the auxiliary yoke part and a state where any part of the distal end portion is not opposed to the auxiliary yoke part are created while the rotor is rotating. A higher reluctance torque is obtained from an attractive force exerted when the state shifts from the state where any part of the distal end portion is not opposed to the auxiliary yoke part to the state where part of the distal end portion is opposed to the auxiliary yoke part. Accordingly, a high torque, a high output, and downsizing can be satisfied at a higher level.
(4) The synchronous drive motor according to any one of (1) to (3), wherein
   the stator core includes six or more teeth,
   each of the six or more teeth includes a distal end portion that is opposed to the magnet face, and the distal end portion has a smaller circumferential width than the sum of the circumferential width of the magnet face and the circumferential width of the distal end surface of the auxiliary yoke part, the number of the magnet faces being more than the number of the teeth.
   The configuration of (4) is able to suppress an increase in the amount (volume) of the winding of each tooth while sufficiently ensuring the amount (volume) of the windings of the entire synchronous drive motor. Therefore, for example, further increasing the number of turns of the winding or adopting a wire having a larger diameter for the winding is allowed, with suppression of an increase in the size of the synchronous drive motor. As a result, a high torque, a high output, and downsizing can be satisfied at a higher level.
(5) The synchronous drive motor according to any one of (1) to (4), wherein
   the distal end portion has a smaller circumferential width than the sum of the circumferential width of the magnet face and the circumferential width of the distal end surface of the auxiliary yoke part and than a circumferential width of a portion having the largest circumferential width of the tooth, the number of the magnet faces being more than the number of the teeth.
   In the synchronous drive motor of (5), the circumferential width of the distal end portion of the tooth is smaller than the sum of the circumferential width of the magnet face, the number of which is more than the number of the teeth, and the circumferential width of the distal end surface of the auxiliary yoke part. Additionally, the circumferential width of the distal end portion of the tooth is smaller than the circumferential width of a portion of the tooth having the largest circumferential width. Such a configuration further improves the degree of freedom in the design of the winding. Therefore, for example, further increasing the number of turns of the winding or adopting a wire having a larger diameter for the winding is allowed. Accordingly, a high torque, a high output, and downsizing can be satisfied at a higher level.
(6) The synchronous drive motor according to any one of (1) to (5), wherein
   the distal end portion has a smaller circumferential width than the sum of the circumferential width of the magnet face and the circumferential width of the distal end surface of the auxiliary yoke part, and the distal end portion has a larger axial thickness than the circumferential width of the distal end portion, the number of the magnet faces being more than the number of the teeth.
   The configuration of (6) allows a reduction in the circumferential width as compared with a configuration in which the axial thickness is equal to or less than the circumferential width, on the condition that, for example, the area of the distal end portion is fixed at a certain value. Therefore, the inter-tooth gap can be ensured more widely. Accordingly, a high torque, a high output, and downsizing can be satisfied at a higher level.
(7) The synchronous drive motor according to any one of (1) to (6), wherein
   when the distal end portion is viewed along a rotation axis of the synchronous drive motor, an outer edge of the winding wound on the tooth with respect to the circumferential direction is located outer than an outer edge of the distal end portion of the tooth with respect to the circumferential direction.
   The configuration of (7) increases a torque because a large amount of winding is wound on the tooth, as compared with a configuration in which, for example, the outer edge of the winding with respect to the circumferential direction is located within the outer edge of the distal end portion of the tooth with respect to the circumferential direction. Accordingly, a high torque, a high output, and downsizing can be satisfied at a higher level.
(8) The synchronous drive motor according to any one of (1) to (7), wherein
   the permanent magnet part is arranged radially outside the stator,
   each of the teeth includes a distal end portion that is opposed to the magnet face arranged radially outside the stator, and the distal end portion has a smaller circumferential width than the sum of the circumferential width of the magnet face and the circumferential width of the distal end surface of the auxiliary yoke part, the number of the magnet faces being more than the number of the teeth.
   In the configuration of (8), the magnet face is arranged radially outside the stator, and the distal end portion of the tooth is opposed to the magnet face that is provided outside the stator. Therefore, the interval between the distal end portions of adjacent teeth is relatively wider than the interval between proximal portions (located opposite to the distal end portions) of the adjacent teeth. This configuration further increases the degree of freedom in the arrangement of the winding. Accordingly, a high torque, a high output, and downsizing can be satisfied at a higher level.
(9) The synchronous drive motor according to any one of (1) to (7), wherein
   the permanent magnet part is arranged radially inside the stator,
   each of the teeth includes a distal end portion that is opposed to the magnet face arranged radially inside the stator, and the distal end portion has a smaller circumferential width than the sum of the circumferential width of the magnet face and the circumferential width of the distal end surface of the auxiliary yoke part, the number of the magnet faces being more than the number of the teeth.
   In the configuration of (9), the magnet face is arranged radially inside the stator, and the distal end portion of the tooth is opposed to the magnet face that is provided inside the stator. Therefore, the interval between adjacent teeth with respect to the circumferential direction decreases at a location closer to the distal end portion with respect to the radial direction. In this respect, however, the configuration of (9) is able to more highly exert the effect that the degree of freedom in the arrangement of the winding is increased because the circumferential width of the distal end portion is smaller than the sum of the circumferential width of the magnet face, the number of which is more than the number of teeth, and the circumferential width of the distal end surface of the auxiliary yoke part. Accordingly, a high torque, a high output, and downsizing can be satisfied at a higher level.
(10) The synchronous drive motor according to any one of (1) to (7), wherein
   the rotor is arranged with the magnet faces being opposed to the teeth with respect to a rotation axis direction of the rotor,
   each of the teeth includes a distal end portion that is opposed to the magnet face with respect to the rotation axis direction, and the distal end portion has a smaller circumferential width than the sum of the circumferential width of the magnet face and the circumferential width of the distal end surface of the auxiliary yoke part, the number of the magnet faces being more than the number of the teeth.
   In the synchronous drive motor of (10), the magnet faces are arranged opposed to the teeth with respect to the rotation axis direction of the rotor. Therefore, the tooth extends in the rotation axis direction. This offers a high degree of freedom in the arrangement of the winding. Accordingly, a high torque, a high output, and downsizing can be satisfied at a higher level.
(11) The synchronous drive motor according to any one of (1) to (10), wherein
   the permanent magnet part is formed of a rare-earth magnet,
   each of the teeth includes a distal end portion that is opposed to the magnet face formed by the rare-earth magnet, and the distal end portion has a smaller circumferential width than the sum of the circumferential width of the magnet face and the circumferential width of the distal end surface of the auxiliary yoke part, the number of the magnet faces being more than the number of the teeth.
   A rare-earth magnet has high magnetic characteristics, and accordingly is shaped with a small thickness when used. In the configuration of (11), the number of magnet faces is more than the number of teeth. This makes the circumferential width of the magnet face smaller, on the condition that the size of the synchronous drive motor is constant. As a result, an effect that the permeance coefficient is increased due to a small thickness of the magnet is highly exerted. Accordingly, a high torque, a high output, and downsizing can be satisfied at a higher level.
(12) The synchronous drive motor according to any one of (1) to (10), wherein
   the permanent magnet part is formed of a ferrite magnet,
   each of the teeth includes a distal end portion that is opposed to the magnet face formed by the ferrite magnet, and the distal end portion has a smaller circumferential width than the sum of the circumferential width of the magnet face and the circumferential width of the distal end surface of the auxiliary yoke part, the number of the magnet faces being more than the number of the teeth.
   Magnetic characteristics of the ferrite magnet are lower than the magnetic characteristics of a rare-earth magnet. Thus, for the production of magnetic fluxes almost at the same level as the magnetic fluxes produced by the rare-earth magnet, the permanent magnet part formed of the ferrite magnet needs to have a larger thickness than the thickness of the rare-earth magnet. In the configuration of (12), the number of magnet faces is more than the number of teeth. This makes the circumferential width of the magnet face smaller, on the condition that the size of the synchronous drive motor is constant. A combination of the thickness ensured by the ferrite magnet and the small circumferential width of the magnet face improves the permeance coefficient. Accordingly, a high torque, a high output, and downsizing can be satisfied at a higher level.
(13) A drive unit comprising:
   the synchronous drive motor according to any one of (1) to (12); and
   a control device configured to supply, to the winding, a drive current that includes a d-axis current component.

In the configuration of (13), the number of magnet faces is more than the number of teeth, and therefore the angular velocity ω is high as compared with the configuration in which the number of magnet faces is less than the number of teeth. This can maintain impedance even when an inductance decreases in a configuration in which the circumferential width of the distal end portion of the tooth is set smaller than the sum of the circumferential width of the magnet face and the circumferential width of a distal end surface of an auxiliary yoke part for improvement of an output. Therefore, in a case where a voltage that cancels an electromotive force is generated based on the product of the impedance and a d-axis current, a d-axis current component can be suppressed to a low level. Accordingly, a high torque, a high output, and downsizing can be satisfied at a high level in a high-speed rotation region, too.

### Advantageous Effects of Invention

The present invention is able to provide a synchronous drive motor that satisfies a high torque, a high output, and downsizing at a higher level.

### Brief Description of Drawings

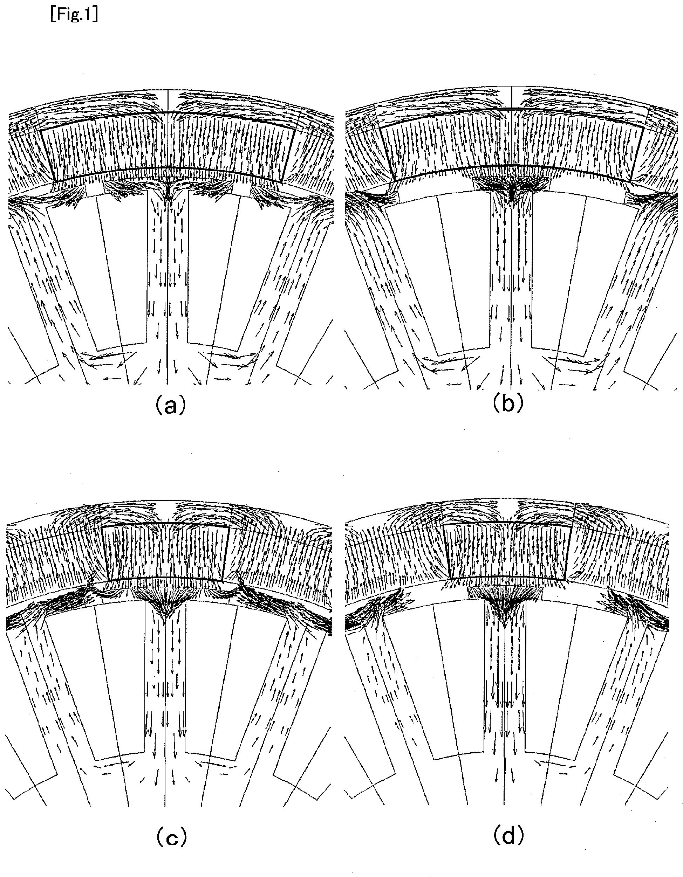

[FIG. 1] (a) is a diagram showing an example of magnetic fluxes produced by a magnet of a synchronous drive motor configured such that the number of magnet faces is 2/3 of the number of teeth and such that a distal end portion of each tooth has a large circumferential width; (b) is a diagram showing an example of magnetic fluxes produced by a magnet of a synchronous drive motor configured such that the number of magnet faces is 2/3 of the number of teeth and such that a distal end portion of each tooth has a small circumferential width; (c) is a diagram showing an example of magnetic fluxes produced by a magnet of a synchronous drive motor configured such that the number of magnet faces is more than the number of teeth and such that a distal end portion of each tooth has a large circumferential width; and (d) is a diagram showing an example of magnetic fluxes produced by a magnet of a synchronous drive motor configured such that the number of magnet faces is more than the number of teeth and such that a distal end portion of each tooth has a small circumferential width.
[FIG. 2] (a) is a graph showing the relationship between an inter-tooth gap and interlinkage magnetic fluxes; and (b) is a graph showing the relationship between the inter-tooth gap and leakage magnetic fluxes occurring between teeth.
[FIG. 3] (a) is a graph showing the relationship between the inter-tooth gap and a torque; and (b) is a graph showing the relationship between the inter-tooth gap and an inductance.
[FIG. 4] (a) is a diagram showing magnetic fluxes of a synchronous drive motor including an auxiliary yoke part arranged in an interval between magnets; (b) is a diagram showing magnetic fluxes of a synchronous drive motor including no auxiliary yoke part arranged in an interval between magnets; and (c) is a graph showing torques of the synchronous drive motors shown in (a) and (b).
[FIG. 5] (a) is an exemplary graph showing details of a torque of a synchronous drive motor; and (b) is a graph showing a current supplied to a synchronous drive motor.
[FIG. 6] (a) shows magnetic fluxes under a state where the rotor has a phase (rotation angle) of 0° in electrical angle; and (b) shows magnetic fluxes under a state where the rotor is rotated clockwise by 30° in electrical angle.
[FIG. 7] (a) shows magnetic fluxes under a state where the rotor has a phase (rotation angle) of 0° in electrical angle; and (b) shows magnetic fluxes under a state where the rotor is rotated clockwise by 30° in electrical angle.
[FIG. 8] A cross-sectional view schematically showing an outline configuration of a wheel including a synchronous drive motor according to a first embodiment of the present invention.
[FIG. 9] A cross-sectional view schematically showing the wheel.
[FIG. 10] (a) is a cross-sectional view schematically showing, on an enlarged scale, a rotor and a stator in an example; and (b) is a cross-sectional view showing, on an enlarged scale, permanent magnet parts and the vicinity thereof.
[FIG. 11] A diagram schematically showing, on an enlarged scale, how teeth shown in FIG. 10(a) are arranged when viewed in a radial direction from the rotor.
[FIG. 12] A diagram for explanation of operations of the teeth, windings, permanent magnet parts, and auxiliary yoke parts shown in FIG. 10(a).
[FIG. 13] (a) is a vector diagram showing electrical characteristics in the synchronous drive motor of this embodiment; (b) is a vector diagram showing electrical characteristics in a conventional synchronous drive motor; and (c) is a vector diagram showing electrical characteristics in a synchronous drive motor according to a comparative example.
[FIG. 14] (a) to (c) are diagrams each schematically showing an example of connection of windings.
[FIG. 15] (a) to (c) are diagrams each schematically showing an example of connection of windings.
[FIG. 16] A diagram showing, on an enlarge scale, part of an exemplary synchronous drive motor according to a second embodiment.
[FIG. 17] (a), (b) and (d) are cross-sectional views each showing, on an enlarged scale, an embodiment of the auxiliary yoke part according to the present invention. Fig. 17 (c) is an embodiment not according to the invention.

### Description of Embodiments

As described above, the present inventors have conducted intensive studies on achievement of both a high output and a high torque while maintaining the size of a synchronous drive motor. Details of the studies will be described with reference to the drawings.

In a conventional synchronous drive motor, it has been a design preference that a circumferential width of a distal end portion of a tooth is increased. It has been also a design preference that the number of magnet faces is 2/3 of the number of teeth. Such preferences have conventionally been common wisdom in designing a synchronous drive motor.

FIG. 1(a) is a diagram showing magnetic fluxes produced by a magnet of such a conventional synchronous drive motor. In the synchronous drive motor shown in FIG. 1(a), the number of magnet faces is 2/3 of the number of teeth, and a distal end portion of the tooth has a relatively large circumferential width.

The conventional synchronous drive motor shown in FIG. 1(a), in which the distal end portion of the tooth has a large circumferential width, is able to collect magnetic fluxes from a wide region of the magnet face with a high efficiency. As a result, a large amount of magnetic fluxes is collected and interlinked with windings. Hereinafter, interlinkage magnetic fluxes that are collected from a magnet and interlinked with a winding will be simply referred to as interlinkage magnetic fluxes.

Conventionally, decreasing the circumferential width of a distal end portion of a tooth has not been preferred because it is contrary to the common wisdom mentioned above.

FIG. 1(b) is a diagram showing magnetic fluxes produced by a magnet of a synchronous drive motor in which a distal end portion of a tooth has a small circumferential width. The synchronous drive motor shown in FIG. 1(b) has the same size as the size of the synchronous drive motor shown in FIG. 1(a). The synchronous drive motor shown in FIG. 1(b) has 2:3 as the ratio of the number of magnet faces to the number of teeth, and the ratio is the same as the ratio of the synchronous drive motor shown in FIG. 1(a). In the synchronous drive motor shown in FIG. 1(b), unlike in the synchronous drive motor shown in FIG. 1(a), the distal end portion of the tooth has a relatively small circumferential width.

In the synchronous drive motor shown in FIG. 1(b), the tooth is able to collect a smaller amount of interlinkage magnetic fluxes from the magnet face. More specifically, the circumferential width of the distal end portion of the tooth is small, and therefore the area over which the distal end portion is opposed to the magnet face is narrow. This results in a decrease in interlinkage magnetic fluxes. That is, a synchronous drive motor whose tooth has a distal end portion with a small circumferential width causes reduced interlinkage magnetic fluxes.

Conventionally, setting the number of magnet faces to be more than 2/3 of the number of teeth has not been preferred, either, because it is contrary to the common wisdom mentioned above.

FIG. 1(c) is a diagram showing an example of magnetic fluxes produced by a magnet of a synchronous drive motor in which the number of magnet faces is 4/3 of the number of teeth. The synchronous drive motor shown in FIG. 1(c) has the same size as the size of the synchronous drive motor shown in FIG. 1(a). The synchronous drive motor shown in FIG. 1(c) includes a tooth whose distal end portion has the same circumferential width as the circumferential width of the distal end portion of the tooth included in the synchronous drive motor shown in FIG. 1(a).

In the synchronous drive motor shown in FIG. 1(c), the distal end portion of the tooth has a relatively large circumferential width, so that the interval between the distal end portions of adjacent teeth is narrow. This causes magnetic fluxes inputted from the magnet to the distal end portion of the tooth to partially leak through the distal end portion into an adjacent magnet.

Reducing the circumferential width of the distal end portion of the tooth or setting the number of magnet faces to be more than 2/3 of the number of teeth as shown in FIG. 1(b) or (c) did not give a good result. The results shown in FIG. 1(a) to (c) are according to the two types of common wisdom mentioned above.

The present inventors have attempted to concurrently overturn both the common wisdom that the number of magnet faces is set to be 2/3 of the number of teeth and the common wisdom that the protruding portion of a tooth has an increased size. A result of the attempt is shown in FIG. 1(d).

FIG. 1(d) is a diagram showing an example of magnetic fluxes produced by a magnet of a synchronous drive motor in which the number of magnet faces is 4/3 of the number of teeth and a distal end portion of a tooth has a small circumferential width. The synchronous drive motor shown in FIG. 1(d) has the same size as the size of the synchronous drive motor shown in FIG. 1(a). The synchronous drive motor shown in FIG. 1(d) includes a tooth whose distal end portion has the same circumferential width as the circumferential width of the distal end portion of the tooth included in the synchronous drive motor shown in FIG. 1(b).

The synchronous drive motor shown in FIG. 1(d) includes a magnet face whose circumferential width is smaller than the circumferential widths of the magnet faces included in the synchronous drive motors shown in FIG. 1(a) and (b). Although the circumferential width of the distal end portion of the tooth included in the synchronous drive motor shown in FIG. 1(d) is small, a reduction in the area over which the distal end portion of the tooth is opposed to the magnet face is suppressed because the circumferential width of the magnet face is small, too. Accordingly, the synchronous drive motor shown in FIG. 1(d) achieves suppression of a reduction in interlinkage magnetic fluxes, which may otherwise be involved in the small circumferential width of the distal end portion of the tooth.

Unlike the synchronous drive motor shown in FIG. 1(c), the synchronous drive motor shown in FIG. 1(d) suppresses occurrence of a situation where the magnetic fluxes inputted to the distal end portion of the tooth partially leak through the distal end portion into an adjacent magnet, because the distal end portion of the tooth has a small circumferential width. As a result, the synchronous drive motor shown in FIG. 1(d) achieves suppression of a decrease in the interlinkage magnetic fluxes.

In the synchronous drive motor shown in FIG. 1(d), as described above, a decrease in the interlinkage magnetic fluxes that is involved in a small circumferential width of the distal end portion of the tooth is suppressed, and additionally a decrease in the interlinkage magnetic fluxes is suppressed because of a reduction in the magnetic fluxes that escape to the distal end portion of an adjacent tooth. That is, in the synchronous drive motor shown in FIG. 1(d), suppression of a decrease in the interlinkage magnetic fluxes is achieved even though both of the two types of common wisdom mentioned above are overturned concurrently. The relationship thereof will be described with reference to the drawings.

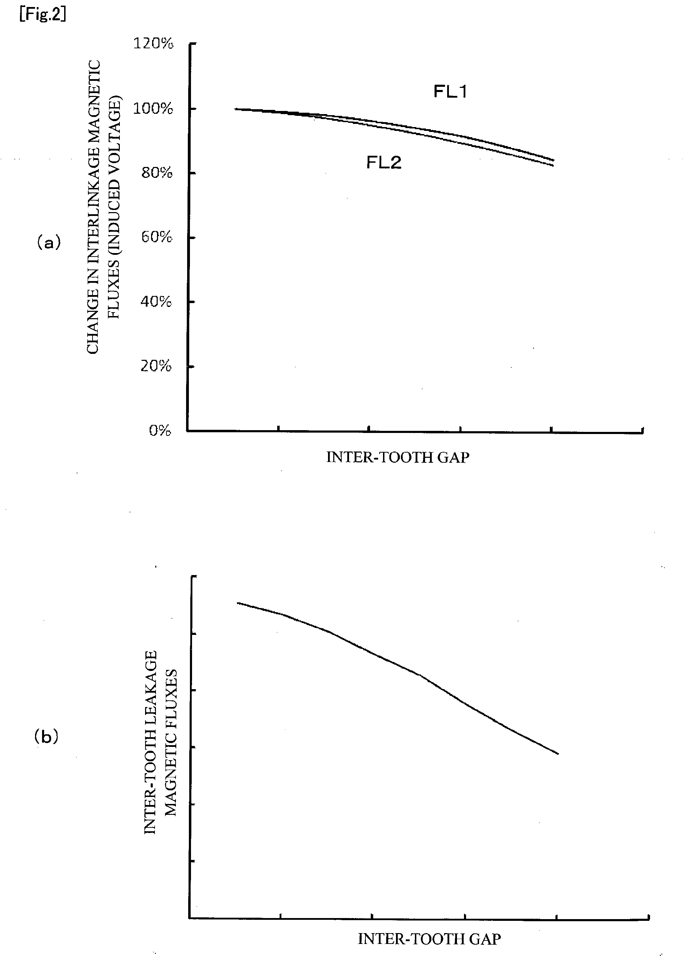

FIG. 2(a) is a graph showing a change in the interlinkage magnetic fluxes relative to an inter-tooth gap.

FIG. 2(a) shows interlinkage magnetic fluxes FL1 and FL2 of two synchronous drive motors having the same size. The interlinkage magnetic fluxes FL1 are interlinkage magnetic fluxes of a synchronous drive motor configured such that the number of magnet faces is more than the number of teeth. More specifically, the interlinkage magnetic fluxes FL1 are interlinkage magnetic fluxes of a synchronous drive motor configured such that the number of magnet faces is 4/3 of the number of teeth. The interlinkage magnetic fluxes FL2 are interlinkage magnetic fluxes of a synchronous drive motor configured such that the number of magnet faces is 2/3 of the number of teeth.

In the graph shown in FIG. 2(a), the horizontal axis represents the inter-tooth gap. As the inter-tooth gap increases, the circumferential width of the distal end portion of the tooth decreases. In the graph shown in FIG. 2(a), the vertical axis represents the interlinkage magnetic fluxes. The interlinkage magnetic fluxes are measured as, for example, an induced voltage that is a time derivative of the interlinkage magnetic fluxes. Hereinafter, the value of the inter-tooth gap corresponding to the left end of the curves showing the interlinkage magnetic fluxes FL1 and FL2 in FIG. 2(a) will be referred to as a minimum gap.

In FIG. 2(a), the interlinkage magnetic fluxes per tooth are shown.

In a synchronous drive motor including a large number of magnet faces, as compared with in a synchronous drive motor including a small number of magnet faces, the magnet face has a smaller area. Accordingly, the synchronous drive motor including a large number of magnet faces causes a smaller amount of interlinkage magnetic fluxes per tooth than the synchronous drive motor including a small number of magnet faces does. Thus, if the vertical axis of the graph shown in FIG. 2(a) represented the absolute value of the amount of change in the interlinkage magnetic fluxes, the interlinkage magnetic fluxes FL1 should be less than the interlinkage magnetic fluxes FL2. In FIG. 2(a), however, the interlinkage magnetic fluxes FL1 and FL2 are shown in a relative manner based on the definition that the amount of interlinkage magnetic fluxes obtained when the inter-tooth gap is the minimum gap corresponds to 100% in both of the two synchronous drive motors. In other words, the interlinkage magnetic fluxes FL1 and FL2 shown in FIG. 2(a) are ones obtained after being converted such that they are comparable with each other. Therefore, the changes in the interlinkage magnetic fluxes FL1 and FL2 shown in FIG. 2(a) are comparable with each other without the need to consider a difference in the number of magnet faces and a difference in the area of the magnet face between the two synchronous drive motors. As for an average torque per rotation of the synchronous drive motor, the average torque is proportional to the number of magnet faces. Thus, the relationship of the interlinkage magnetic fluxes of all the teeth of the two synchronous drive motors can be interpreted as identical to the relationship shown in FIG. 2(a).

As shown in FIG. 2(a), the interlinkage magnetic fluxes FL1 and FL2 decrease as the circumferential width of the distal end portion of the tooth decreases so that the inter-tooth gap increases. This is because the area over which the distal end portion of the tooth is opposed to the magnet face decreases, as shown in FIG. 1(a) to FIG. 1(d). Here, the amount of decrease in the interlinkage magnetic fluxes FL1 of the synchronous drive motor configured such that the number of magnet faces is more than the number of teeth is less than the amount of decrease in the interlinkage magnetic fluxes FL2 of the synchronous drive motor configured such that the number of magnet faces is 2/3 of the number of teeth. This indicates that a decrease in the interlinkage magnetic fluxes is suppressed even though both of the two types of common wisdom mentioned above are overturned concurrently.

FIG. 2(b) is a graph showing a change in inter-tooth leakage magnetic fluxes relative to the inter-tooth gap.

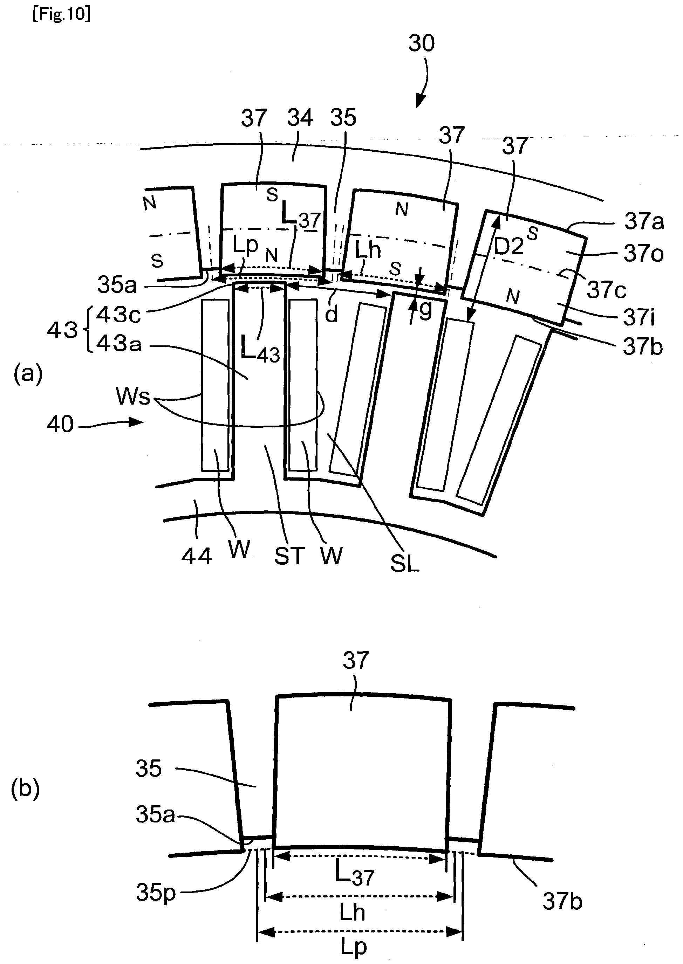

The inter-tooth leakage magnetic fluxes are represented as, for example, magnetic fluxes flowing toward an adjacent tooth 43 through an inter-tooth gap d among magnetic fluxes produced by a winding W of a stator 40 shown in FIG. 10(a) which will be described later. A larger amount of inter-tooth leakage magnetic fluxes results in a smaller amount of stator magnetic fluxes. The magnetic fluxes having flowed toward the adjacent tooth 43 do not contribute to generation of a torque. The amount of leakage magnetic fluxes depends largely on the shape of the stator. The two synchronous drive motors has the same size and therefore has the same stator shape, though the number of magnet faces is different. Accordingly, in the example shown in FIG. 2(b), the inter-tooth leakage magnetic fluxes of the synchronous drive motor configured such that the number of magnet faces is more than the number of teeth are identical to the inter-tooth leakage magnetic fluxes of the synchronous drive motor configured such that the number of magnet faces is 2/3 of the number of teeth. Thus, the inter-tooth leakage magnetic fluxes shown in FIG. 2(b) indicate the inter-tooth leakage magnetic fluxes of these two synchronous drive motors.

As shown in FIG. 2(b), when the circumferential width of the distal end portion of the tooth is small so that the inter-tooth gap is large, the amount of inter-tooth leakage magnetic fluxes is small. This is because a reluctance of the inter-tooth gap increases as the inter-tooth gap increases. A decrease in the inter-tooth leakage magnetic fluxes results in an increase in the stator magnetic fluxes.

FIG. 1(a) to (d) and FIG. 2(a), (b) indicate the following relationships (A) and (B) regarding the interlinkage magnetic fluxes and the inter-tooth leakage magnetic fluxes of the two synchronous drive motors described above.
(A) In both of the two synchronous drive motors, the interlinkage magnetic fluxes decrease as the inter-tooth gap increases. Here, a decrease in the interlinkage magnetic fluxes FL1 of the synchronous drive motor configured such that the number of magnet faces is more than the number of teeth is suppressed as compared with a decrease in the interlinkage magnetic fluxes FL2 of the synchronous drive motor configured such that the number of magnet faces is 2/3 of the number of teeth.
(B) In both of the two synchronous drive motors, the inter-tooth leakage magnetic fluxes decrease as the inter-tooth gap increases. The two synchronous drive motors have the same or substantially the same degree of decrease in the inter-tooth leakage magnetic fluxes.

The present inventors have found out that, based on the relationships (A) and (B), a change in the torque relative to the inter-tooth gap differs between the two synchronous drive motors described above. Next, a difference in the change in the torque relative to the inter-tooth gap between the two synchronous drive motors described above will be described with reference to the drawings.

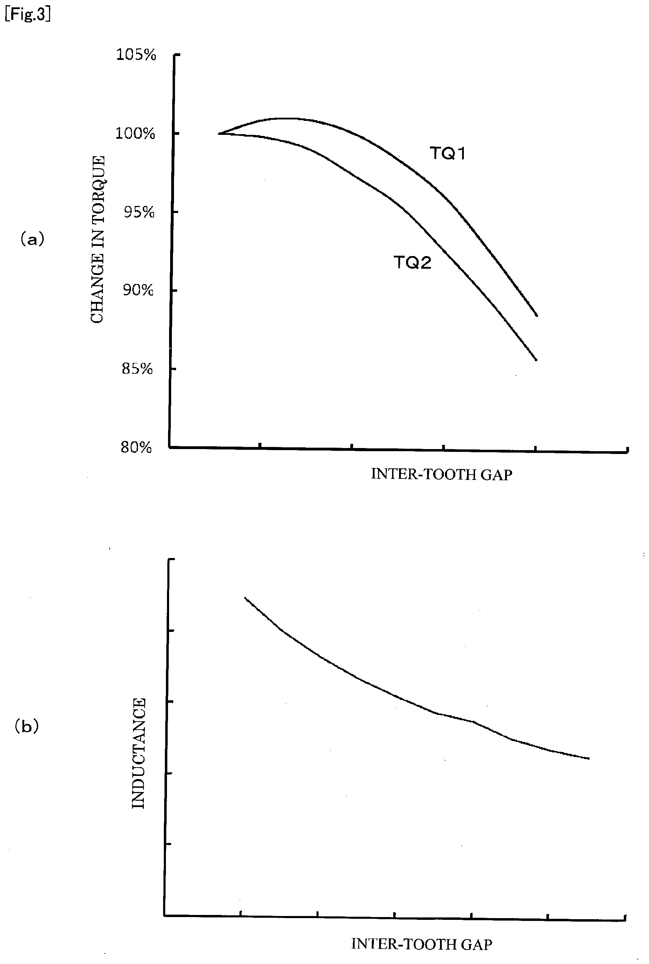

FIG. 3(a) is a graph showing a change in the torque relative to the inter-tooth gap.

FIG. 3(a) shows a torque TQ1 of the synchronous drive motor configured such that the number of magnet faces is more than the number of teeth and a torque TQ2 of the synchronous drive motor configured such that the number of magnet faces is 2/3 of the number of teeth. A synchronous drive motor configured such that the number of magnet faces is 4/3 of the number of teeth is illustrated as an example of the synchronous drive motor configured such that the number of magnet faces is more than the number of teeth.

The torque is proportional to the value of [the number of magnet faces × interlinkage magnetic fluxes × stator magnetic fluxes]. As shown in FIG. 2(a), in the synchronous drive motor configured such that the number of magnet faces is more than the number of teeth, a decrease in the interlinkage magnetic fluxes FL1 is suppressed even when the circumferential width of the distal end portion of the tooth decreases so that the inter-tooth gap increases.

Therefore, as shown in FIG. 3(a), when the inter-tooth gap increases, the torque TQ2 of the synchronous drive motor configured such that the number of magnet faces is 2/3 of the number of teeth rapidly decreases, while the torque TQ1 of the synchronous drive motor configured such that the number of magnet faces is more than the number of teeth increases once. After increasing once, the torque TQ1 decreases. The decrease in the torque TQ1 is suppressed as compared with the torque TQ2 of the synchronous drive motor configured such that the number of magnet faces is 2/3 of the number of teeth. That is, as compared with the synchronous drive motor configured such that the number of magnet faces is 2/3 of the number of teeth, the synchronous drive motor configured such that the number of magnet faces is more than the number of teeth achieves suppression of a decrease in the torque even when the circumferential width of the distal end portion of the tooth is reduced. Additionally, in the synchronous drive motor configured such that the number of magnet faces is more than the number of teeth, reducing the circumferential width of the distal end portion of the tooth to increase the inter-tooth gap causes a region that provides a higher torque than the torque obtained in a case of the minimum gap. The synchronous drive motor configured such that the number of magnet faces is more than the number of teeth is able to obtain a high torque by, for example, increasing the stator magnetic fluxes with suppression of a decrease in the interlinkage magnetic fluxes.

The present inventors have further conducted studies about arranging an auxiliary yoke part in an interval between magnets that are adjacent to each other with respect to the circumferential direction in a synchronous drive motor configured such that the number of magnet faces is more than the number of teeth and such that a distal end portion of a tooth has a small circumferential width.

Arranging an auxiliary yoke part in an interval between adjacent magnets can cause a reluctance torque due to an attractive force produced between the auxiliary yoke part and a tooth. In this respect, it has been considered that arranging an auxiliary yoke part in an interval between adjacent magnets while maintaining the size of the synchronous drive motor leads to a reduction in interlinkage magnetic fluxes because the volume of the magnet and a magnet face of the magnet are reduced.

As mentioned above, the present inventors overturned the common wisdom conventionally accepted, and attempted to provide a larger number of magnet faces than the number of teeth, though setting the number of magnet faces to be 2/3 of the number of teeth has been a design preference in the conventional synchronous drive motor. As a result of the attempt, the volume of a magnet per magnetic pole and the area of a magnet face per magnetic pole were reduced. In such a condition, the present inventors attempted to arrange an auxiliary yoke part between adjacent magnets.

Arranging an auxiliary yoke part between adjacent magnets results in a further reduced volume of the magnet per magnetic pole and a further reduced area of the magnet face per magnetic pole. Based on conventional design philosophy for a synchronous drive motor, it has been considered unfavorable that the volume of a magnet per magnetic pole and the area of a magnet face per magnetic pole are reduced under a situation where magnets of the same type are adopted. However, the present inventors have attempted to further provide an auxiliary yoke part in a synchronous drive motor having a larger number of magnet faces than the number of teeth.

The design tested by the present inventors did not conform to the conventional design philosophy for a synchronous drive motor.

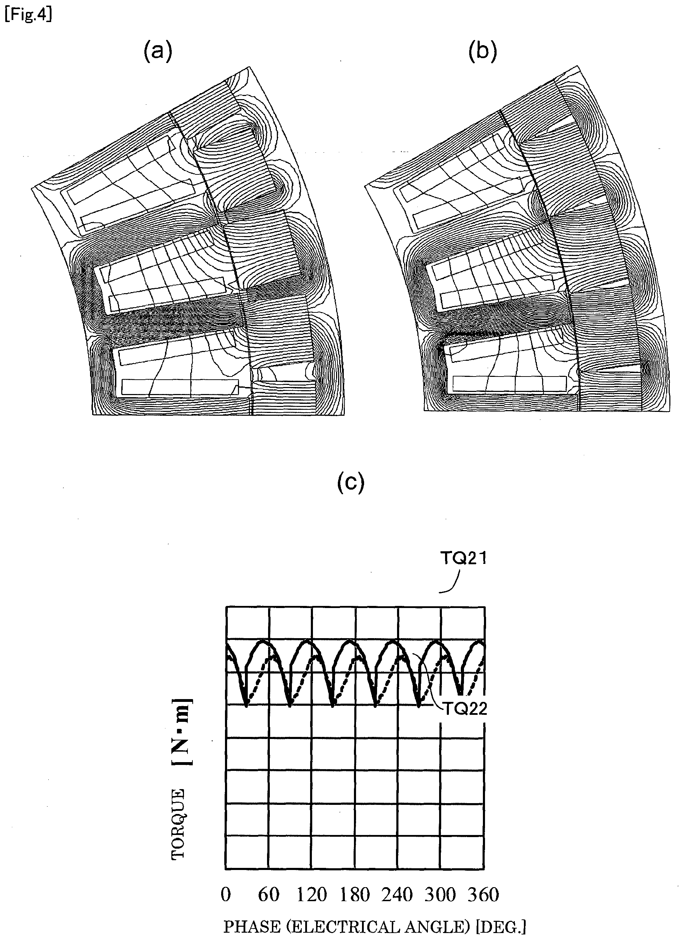

FIG. 4(a) is a diagram showing magnetic fluxes of a synchronous drive motor including an auxiliary yoke part arranged in an interval between magnets. FIG. 4(b) is a diagram showing magnetic fluxes of a synchronous drive motor including no auxiliary yoke part arranged in an interval between magnets. FIG. 4(c) is a graph showing torques of the synchronous drive motors shown in FIG. 4(a) and FIG. 4(b).

FIG. 4(a) and FIG. 4(b) are different from FIG. 1(a) to FIG. 1(d), in terms of the way of illustrating magnetic fluxes and in that the magnetic fluxes illustrated in FIG. 4(a) and FIG. 4(b) contain magnetic fluxes caused by a current of windings, too. Additionally, teeth of the synchronous drive motors shown in FIG. 4(a) and FIG. 4(b) have smaller widths than the width of the synchronous drive motor shown in FIG. 1(d) described above. In the synchronous drive motors shown in FIG. 4(a) and FIG. 4(b), the circumferential width of a distal end portion of the tooth is smaller than the sum of the circumferential width of a magnet face and the circumferential width of a distal end surface of the auxiliary yoke part. The sum is equivalent to the circumferential width of a magnetic pole face. Moreover, in the synchronous drive motors shown in FIG. 4(a) and FIG. 4(b), the number of magnet faces is 4/3 of the number of teeth. These features are the same as those adopted in the synchronous drive motor shown in FIG. 1(d).

In the graph shown in FIG. 4(c), the horizontal axis represents the phase (rotation angle) of rotation of a rotor. The phase is the electrical angle. FIG. 4(c) shows a torque TQ21 of the synchronous drive motor of FIG. 4(a) and a torque TQ22 of the synchronous drive motor of FIG. 4(b).

The synchronous drive motor shown in FIG. 4(a) includes an auxiliary yoke part. Therefore, in the synchronous drive motor shown in FIG. 4(a), the magnet has a smaller circumferential width as compared with the synchronous drive motor shown in FIG. 4(b). As a result, a smaller amount of magnetic fluxes are produced by the magnet. However, as shown in FIG. 4(c), the torque TQ21 of the synchronous drive motor of FIG. 4(a) is higher than the torque TQ22 of the synchronous drive motor of FIG. 4(b). This reveals that, in the synchronous drive motor of FIG. 4(a), the amount of torque obtained due to the presence of the auxiliary yoke part exceeds the amount of decrease in torque caused by the reduced size of the magnet.

In this manner, arranging an auxiliary yoke part in an interval between adjacent magnets enables improvement of the torque in a synchronous drive motor configured such that the number of magnet faces is more than the number of teeth and such that the circumferential width of a distal end portion of the tooth is smaller than the sum of the circumferential width of the magnet face and the circumferential width of a distal end surface of the auxiliary yoke part.

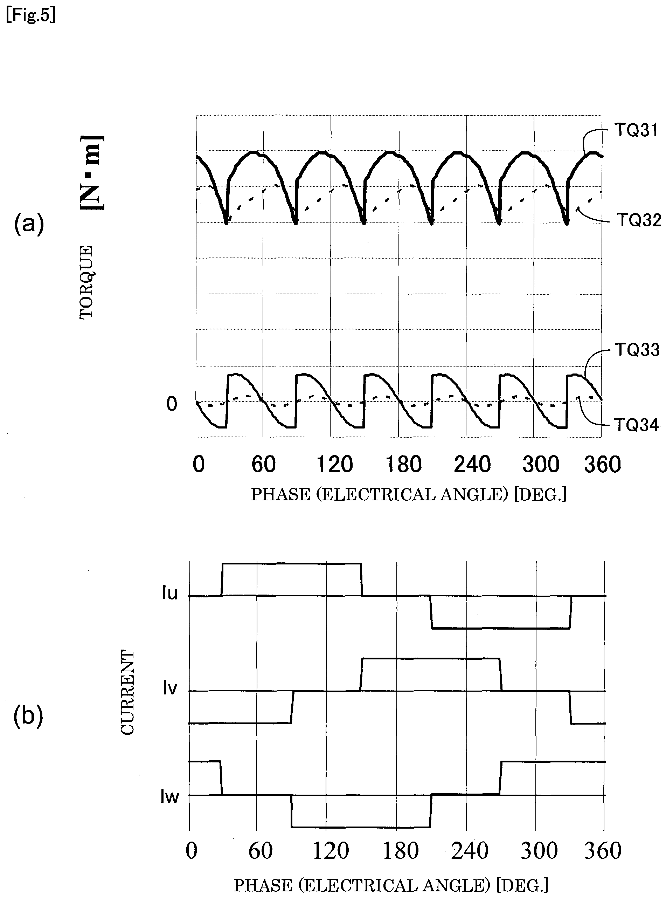

FIG. 5(a) is an exemplary graph showing details of a torque of a synchronous drive motor. FIG. 5(b) is a graph showing a current supplied to a synchronous drive motor.

In FIG. 5(a) and FIG. 5(b), the horizontal axis represents the phase (rotation angle) of rotation of a rotor, which is the same as represented by the graph shown in FIG. 4(c). While the rotor is rotating through 360° in electrical angle, currents Iu, Iv, and Iw supplied to the windings change as shown in FIG. 5(b). The torque shown in FIG. 5(a) changes in synchronization with the cycle of the change of the currents Iu, Iv, and Iw.

FIG. 5(a) shows a torque TQ31 of a synchronous drive motor, a torque TQ32 resulting from a magnet, and a torque TQ33 resulting from an auxiliary yoke part. The torque TQ31 of the synchronous drive motor is identical to the torque TQ21 shown in FIG. 4(c). The torque TQ32 resulting from a magnet is a torque obtained under the condition that the auxiliary yoke part provided in the interval between the magnets of the synchronous drive motor shown in FIG. 4(a) is removed. Under such a condition, an air gap appears in a region from which the auxiliary yoke part has been removed, that is, in a region between the adjacent magnets. The torque TQ33 resulting from an auxiliary yoke part is a torque obtained under the condition that the magnet provided in the synchronous drive motor shown in FIG. 4(a) is removed. An air gap appears in a region from which the magnet has been removed. The torque TQ33 corresponds to a reluctance torque. Details of the torque TQ33 resulting from an auxiliary yoke part will be described below.

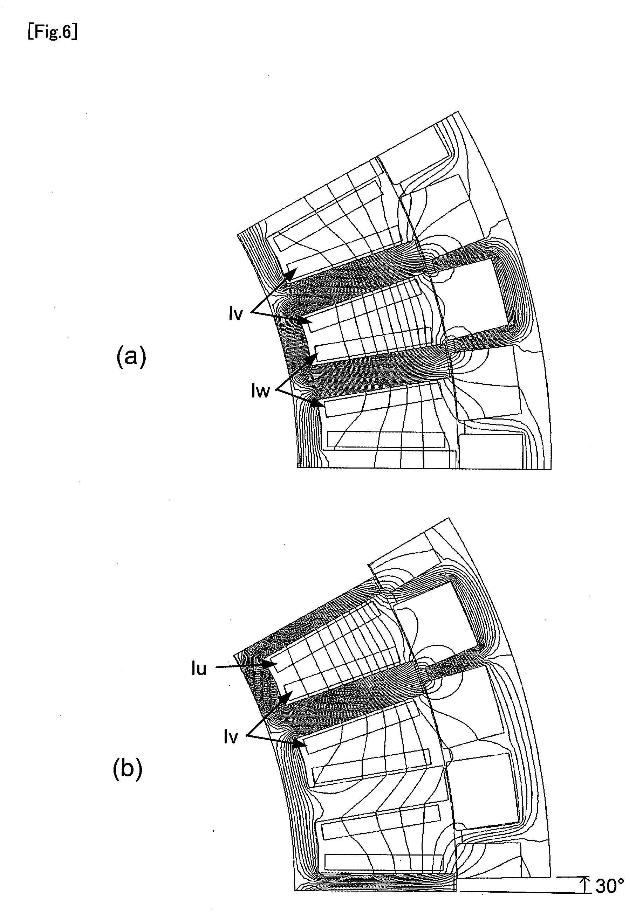

FIG. 6(a) and FIG. 6(b) are diagrams showing magnetic fluxes of the synchronous drive motor in which the magnet has been removed. Assuming that FIG. 6(a) shows the state where the phase (rotation angle) of a rotor is 0° in electrical angle, the state shown in FIG. 6(b) corresponds to a situation where the rotor is rotated clockwise by 30° in electrical angle.

In accordance with the phase (rotation angle) of the rotor, the currents Iu, Iv, and Iw shown in FIG. 5(b) flow to the windings of the corresponding tooth. In FIG. 6(a) and FIG. 6(b), the windings to which the currents flow are indicated by the arrows. For example, when the phase (rotation angle) of the rotor is 0° in electrical angle as shown in FIG. 6(a), the currents Iv and Iw flow to the windings of the corresponding teeth.

Upon rotation of the rotor by 30° in electrical angle from the state shown in FIG. 6(a) so that the state shown in FIG. 6(b) is created, the current status is changed so that the currents Iu and Iv flow to the windings of the corresponding teeth. At this time, the auxiliary yoke part located less forward of the tooth to which the current Iu flows with respect to the rotation direction is attracted to the tooth to which the current Iu flows. As a result, as shown in FIG. 5(a), the torque TQ33 resulting from the auxiliary yoke part largely increases at the position having an electrical angle of 30°. In the state shown in FIG. 6(a), the tooth to which the current Iw flows has its distal end portion opposed to the auxiliary yoke part.

The torque TQ31 of the synchronous drive motor shown in FIG. 5(a) increases so as to be larger than the value of the torque TQ32 resulting from the magnet by an increase amount of the torque TQ33 resulting from the auxiliary yoke part. For example, at the position having an electrical angle of 30°, the torque TQ31 of the synchronous drive motor increases in combination with the large increase in the torque TQ33 resulting from the auxiliary yoke part. That is, the torque TQ31 of the synchronous drive motor increases in accordance with a large amplitude of the reluctance torque. When the torque TQ33 resulting from the auxiliary yoke part has a negative value, the torque TQ31 of the synchronous drive motor is not so much below the torque TQ32 resulting from the magnet. In other words, the amplitude of the torque TQ33 contributes to an increase of the torque TQ31 from and above the torque TQ32. The reason therefor can be considered as follows. When the distal end portion of the tooth is opposed to an auxiliary yoke part, magnetic fluxes produced in the winding of the tooth flows not only to the auxiliary yoke part but also to the two magnets adjacent to this auxiliary yoke part. The magnetic fluxes given from the tooth push magnetic fluxes given from one of the two magnets, so that a repulsive force occurs. On the other hand, an attractive force occurs between the tooth and the other of the two magnets. The repulsive force and the attractive force generate a magnet torque. The distal end portion of the auxiliary yoke part coming to the position opposed to the tooth causes a decrease in the reluctance for the winding, so that an increased amount of magnetic fluxes are caused to flow from the tooth to the auxiliary yoke part by supply of the current to the winding. Accordingly, the magnetic fluxes directed from the tooth to the two magnets adjacent to the auxiliary yoke part are also increased, which makes the attractive force and the repulsive force stronger. As a result, the magnet torque generated by the repulsive force and the attractive force increases. Here, the torque TQ32 resulting from the magnet, which is shown in FIG. 5(a), is a torque obtained under the condition that the auxiliary yoke part is removed, the torque TQ32 does not include an increase in the magnet torque resulting from the auxiliary yoke part. This would be why the amplitude of the torque TQ33, which corresponds to the reluctance torque, contributes to an increase of the torque TQ31 from and above the torque TQ32.

As thus far described, the synchronous drive motor configured such that the number of magnet faces is more than the number of teeth and such that the circumferential width of a distal end portion of the tooth is smaller than the sum of the circumferential width of the magnet face and the circumferential width of a distal end surface of an auxiliary yoke part is able to improve an torque by making use of a reluctance torque caused by the auxiliary yoke part.

The present inventors have also conducted studies about a torque of a synchronous drive motor configured such that the circumferential width of a distal end portion of a tooth is larger than the sum of the circumferential width of a magnet face and the circumferential width of a distal end surface of an auxiliary yoke part.

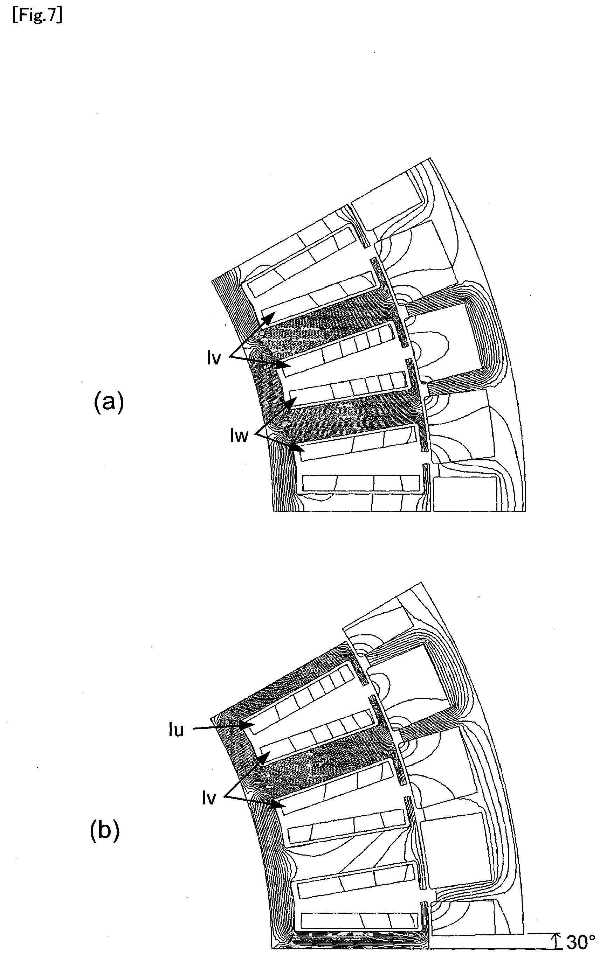

FIG. 7(a) and FIG. 7(b) are diagrams showing magnetic fluxes of a synchronous drive motor configured such that the circumferential width of a distal end portion of a tooth is larger than the sum of the circumferential width of a magnet face and the circumferential width of a distal end surface of an auxiliary yoke part. Assuming that FIG. 7(a) shows the state where the phase (rotation angle) of a rotor is 0° in electrical angle, the state shown in FIG. 7(b) corresponds to a situation where the rotor is rotated clockwise by 30° in electrical angle. Similarly to FIG. 6(a) and FIG. 6(b), FIG. 7(a) and FIG. 7(b) show the synchronous drive motor in which the magnet has been removed.

In FIG. 7(a) and FIG. 7(b), the circumferential width of a distal end portion of a tooth is larger than the sum of the circumferential width of a magnet face and the circumferential width of a distal end surface of an auxiliary yoke part. Therefore, when a current flows through a winding, the auxiliary yoke part is opposed to a tooth wound with the winding. Thus, the auxiliary yoke part is attracted to the tooth to some extent. For example, when the rotor is located at the position having an electrical angle of 30° as shown in FIG. 7(b), the auxiliary yoke part is completely opposed to the distal end portion of the tooth corresponding to the current Iu, which is different from the state shown in FIG. 6(b). Accordingly, a rotation force caused by an attractive force attracting the auxiliary yoke part to the tooth when the current Iu flows is weak. In other words, a reluctance torque is low. FIG. 5(a) shows a torque TQ34 that is a torque resulting from the auxiliary yoke part under the condition shown in FIG. 7(a) and FIG. 7(b), that is, under the condition that the circumferential width of a distal end portion of a tooth is larger than the sum of the circumferential width of a magnet face and the circumferential width of a distal end surface of an auxiliary yoke part. In FIG. 5(a), the amplitude of the torque TQ34 is smaller than the amplitude of the torque TQ33. Thus, the configuration in which the circumferential width of a distal end portion of a tooth is larger than the sum of the circumferential width of a magnet face and the circumferential width of a distal end surface of an auxiliary yoke part provides a reduced reluctance torque.

In contrast, in the synchronous drive motor configured such that the circumferential width of a distal end portion of a tooth is smaller than the sum of the circumferential width of a magnet face and the circumferential width of a distal end surface of an auxiliary yoke part, the auxiliary yoke part is not opposed to a tooth when the current Iu flows through a winding wound on the tooth. That is, the auxiliary yoke part is distant from the distal end portion of the tooth with respect to the circumferential direction. Therefore, when the current Iu flows, an attractive force attracting the tooth to the auxiliary yoke part causes a strong rotation force. As a result, a high reluctance torque is obtained, as represented by the torque TQ33 shown in FIG. 5(a).

As thus far described, the synchronous drive motor configured such that the number of magnet faces is more than the number of teeth and such that the circumferential width of a distal end portion of the tooth is smaller than the sum of the circumferential width of the magnet face and the circumferential width of a distal end surface of an auxiliary yoke part is able to obtain a high reluctance torque due to the auxiliary yoke part.

Moreover, in the synchronous drive motor configured such that the number of magnet faces is more than the number of teeth and such that the circumferential width of a distal end portion of the tooth is smaller than the sum of the circumferential width of the magnet face and the circumferential width of a distal end surface of an auxiliary yoke part, the inter-tooth gap is large, which dramatically improves the degree of freedom in the design of the winding. For example, during a manufacturing process, a wire or a part of a manufacturing apparatus runs through the inter-tooth gap. For example, as shown in FIG. 10(a) which will be described later, a large inter-tooth gap provides a high degree of freedom in the selection of a technique for winding the wire on the tooth to form the winding and in the selection of the type of the manufacturing apparatus. Additionally, a slot SL that is large in response to a small distal end portion 43c of the tooth allows an increase in the number of turns of a winding W. Moreover, for example, the stator 40 shown in FIG. 10(a) can be manufactured by forming a winding W without winding it on any tooth 43 and then inserting the tooth 43 into the winding W. This can narrow the interval between windings W adjacent to each other. As a result, the number of turns of the winding can be increased. As the distal end portion of the tooth has a smaller circumferential width so that the inter-tooth gap is larger, the degree of freedom in the design of the winding is improved. Accordingly, the synchronous drive motor configured such that the number of magnet faces is more than the number of teeth and such that the circumferential width of a distal end portion of the tooth is smaller than the sum of the circumferential width of the magnet face and the circumferential width of a distal end surface of an auxiliary yoke part is able to enhance a torque by increasing the number of turns of the winding.

Therefore, the synchronous drive motor configured such that an auxiliary yoke part is arranged in an interval between magnets, such that the number of magnet faces is more than the number of teeth, and such that the circumferential width of a distal end portion of the tooth is smaller than the sum of the circumferential width of the magnet face and the circumferential width of a distal end surface of the auxiliary yoke part is able to make use of a reluctance torque and enhance a torque by, for example, increasing the stator magnetic fluxes with suppression of a decrease in the interlinkage magnetic fluxes or by increasing the number of turns of the winding. In this way, the present inventors have discovered that concurrently overturning the two types of common wisdom mentioned above with combined use of designs that do not conform to the conventional design philosophy for a synchronous drive motor leads to enhancement of a torque of the synchronous drive motor.

Next, impedance of the winding will be described.

FIG. 3(b) is a graph showing a change in inductance relative to the inter-tooth gap.

As shown in FIG. 3(b), when the circumferential width of the distal end portion of the tooth is small so that the inter-tooth gap is large, the inductance is low. This is because: the inter-tooth gap is included in a magnetic flux path through which magnetic fluxes produced by the winding pass, and a large inter-tooth gap leads to a high reluctance of the inter-tooth gap, which increases a reluctance of the entire magnetic flux path.

A current supplied to the winding of the synchronous drive motor depends on the impedance of the winding. An AC component of the impedance is the product ωL of the angular velocity ω and the inductance L. The synchronous drive motor configured such that the number of magnet faces is more than the number of teeth has a higher angular velocity ω than that of the synchronous drive motor configured such that the number of magnet faces is 2/3 of the number of teeth. As shown in FIG. 3(b), when the circumferential width of the distal end portion of the tooth is small so that the inter-tooth gap is large, the inductance L is low. Therefore, even when the number of magnet faces is more than the number of teeth so that the angular velocity ω is high, the AC component ωL of the impedance can be maintained. To be specific, an increase in the AC component ωL of the impedance, which is caused by an increase in the angular velocity ω, can be suppressed. As a result, a current supplied to the synchronous drive motor can be ensured.

Furthermore, in the synchronous drive motor configured such that an auxiliary yoke part is arranged in an interval between magnets, such that the number of magnet faces is more than the number of teeth, and such that the circumferential width of a distal end portion of the tooth is smaller than the sum of the circumferential width of the magnet face and the circumferential width of a distal end surface of the auxiliary yoke part, the inter-tooth gap is large, which dramatically improves the degree of freedom in the design of the winding. Here, for example, in a case where a wire or a part of a winding apparatus runs through the inter-tooth gap during the manufacturing process, a wire having a large diameter can be used. Additionally, for example, the slot that is large in response to the small distal end portion 43c of the tooth allows use of a wire having a large diameter. Moreover, for example, the stator 40 can be manufactured by forming a winding W without winding it on any tooth 43 and then inserting the tooth 43 into the winding W. This can narrow the interval between windings W adjacent to each other, and therefore allows use of a wire having a large diameter. As a result, a resistance R of the winding can be lowered. Thus, by increasing the current supplied to the winding, both a torque and an output are improved.

As thus far described, the synchronous drive motor configured such that an auxiliary yoke part is arranged in an interval between magnets, such that the number of magnet faces is more than the number of teeth, and such that the circumferential width of a distal end portion of the tooth is smaller than the sum of the circumferential width of the magnet face and the circumferential width of a distal end surface of the auxiliary yoke part is able to improve an output and a torque, as compared with a conventional synchronous drive motor having the same size. Which of the torque and the output is to be more highly improved is adjustable by, for example, which of the diameter of the winding and the number of turns of the winding is more highly increased.

In this manner, the present inventors, which have discovered that concurrently overturning the two types of common wisdom mentioned above enables the synchronous drive motor to satisfy a high torque, a high output, and downsizing at a high level, have accomplished the present invention.

Hereunder, the present invention will be described based on a preferred embodiment with reference to the drawings. In this embodiment, a synchronous drive motor that drives a wheel of a vehicle will be described as an example of the synchronous drive motor according to the present invention.

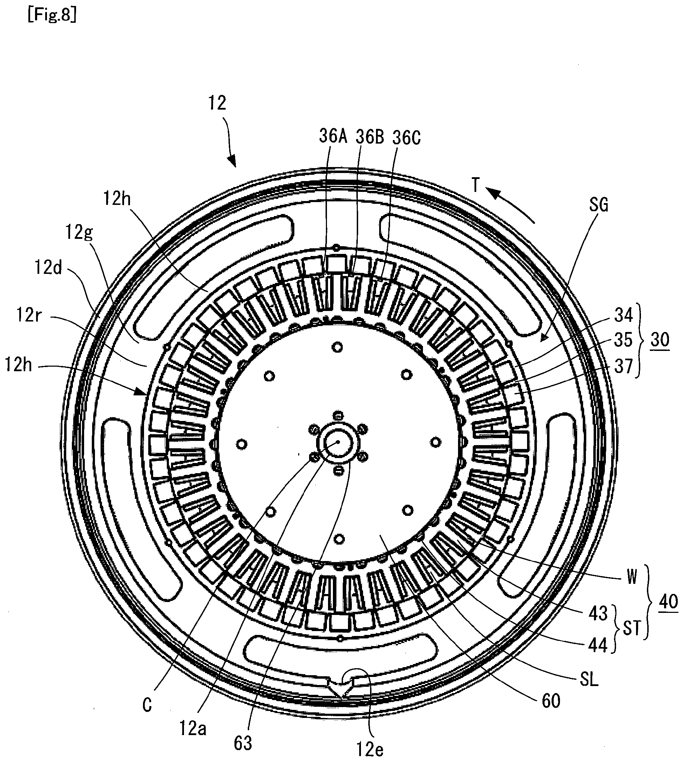

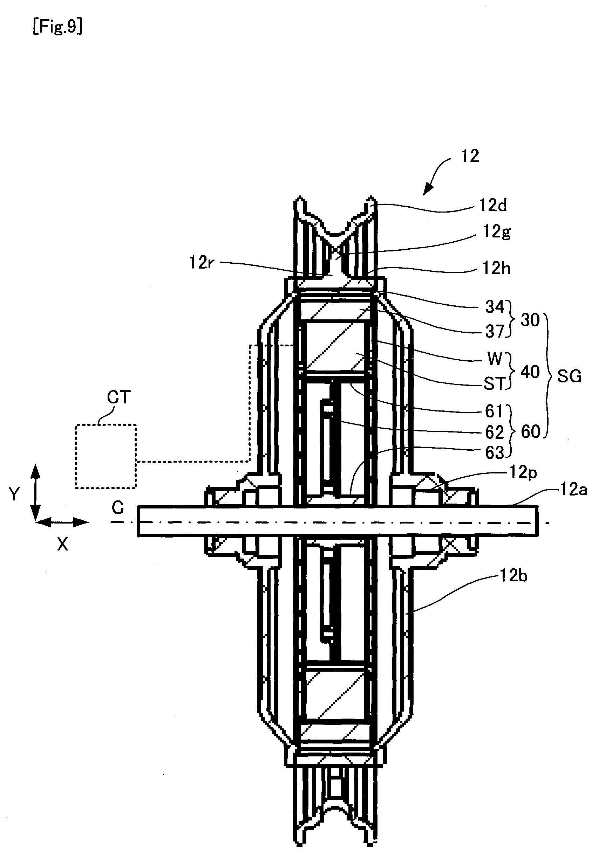

FIG. 8 is a cross-sectional view schematically showing an outline configuration of a wheel 12 including a synchronous drive motor SG according to a first embodiment of the present invention. FIG. 9 is a cross-sectional view schematically showing the wheel 12.

The wheel 12 shown in FIG. 8 is provided to a vehicle (not shown). The vehicle may be, for example, a saddle-ride type electric vehicle. The saddle-ride type electric vehicle is a saddle-ride type vehicle that is electrically driven. Examples of the saddle-ride type vehicle include a two-wheeled vehicle, a three-wheeled vehicle, and a vehicle for off-road use (all-terrain vehicle).

The wheel 12 includes a center shaft 12a. The center of the center shaft 12a serves as a rotation axis C of the wheel 12. The rotation axis C is a center line extending in the longitudinal direction of the center shaft 12a. The center shaft 12a is supported on a vehicle body (not shown) of the vehicle. The cover 12b (see FIG. 9) is rotatably supported on the center shaft 12a via a bearing 12p (see FIG. 7). The cover 12b is not shown in FIG. 8. The cover 12b has a circular shape when seen in the axial direction of the wheel 12. A hub part 12h is attached to and within an outer circumferential portion of the cover 12b. The hub part 12h has a cylindrical shape, and has an opening that extends through the wheel 12 in the axial direction. In other words, the cover 12b covers the opening of the hub part 12h having the cylindrical shape. The synchronous drive motor SG is mounted inside the hub part 12h with respect to a radial direction of the wheel 12. In other words, the synchronous drive motor SG is provided within the hub part 12h. Details of the synchronous drive motor SG will be described later. In this embodiment, the center shaft 12a does not rotate but the cover 12b and the hub part 12h rotate together. The rotation axis C of the synchronous drive motor SG is the same as the rotation axis C of the wheel 12. In this embodiment, the axial direction X, the radial direction Y, and the circumferential direction of the synchronous drive motor SG are the same as the axial direction X, the radial direction Y, and the circumferential direction of the wheel 12, respectively.

A rim part 12d is positioned at the outer circumferential side of the hub part 12h with respect to the radial direction of the wheel 12. The rim part 12d has an annular shape when seen in the axial direction of the wheel 12. The diameter of the rim part 12d is greater than the diameter of the hub part 12h. The hub part 12h and the rim part 12d are connected to each other by a spoke part 12g. The hub part 12h, the rim part 12d, and the spoke part 12g are integrally formed as a single piece made of a non-magnetic material, which, in this embodiment, is a member made of aluminum. Here, the material of the hub part 12h, the rim part 12d, and the spoke part 12g is not limited to aluminum, as long as it is a non-magnetic material. For example, they may be made of magnesium or a reinforced resin. A method for forming the hub part 12h, the rim part 12d, and the spoke part 12g is not particularly limited. For example, casting such as low-pressure casting, forging, or the like, is adoptable to integrally form the hub part 12h, the rim part 12d, and the spoke part 12g. It may be also acceptable that the hub part 12h, the rim part 12d, and the spoke part 12g are separate members, and the hub part 12h, the rim part 12d, and the spoke part 12g are assembled. A tire (not shown) is mounted at the outer circumferential side of the rim part 12d with respect to the radial direction of the wheel 12. The rim part 12d supports the tire. The rim part 12d has a through hole 12e extending through the rim part 12d in the radial direction of the wheel 12. A valve (not shown) of the tire protrudes through the through hole 12e from the outer circumferential side to the inner circumferential side of the rim part 12d. The wheel 12 of this embodiment allows use of a dead space existing radially inside the wheel 12.

The synchronous drive motor SG of this embodiment is an outer rotor in-wheel motor of direct drive type. The synchronous drive motor SG includes a rotor 30 and a stator 40. The rotor 30 includes permanent magnet parts 37, a back yoke part 34, and auxiliary yoke parts 35. In the synchronous drive motor SG of this embodiment, the rotor 30 is an outer rotor and the stator 40 is an inner stator.

The synchronous drive motor SG is an in-wheel motor, and provided inside the hub part 12h with respect to the radial direction of the wheel 12. In other words, the rotor 30 (the permanent magnet parts 37 and the back yoke part 34) and the stator 40 (a stator core ST and windings W) are provided inside the hub part 12h with respect to the radial direction of the wheel 12. The synchronous drive motor SG is an outer rotor electric motor, and the rotor 30 (the permanent magnet parts 37, the back yoke part 34, and the auxiliary yoke parts 35) is located outside the stator 40 (the stator core ST and the windings W) with respect to the radial direction of the wheel 12. The synchronous drive motor SG also includes a support member 60. The support member 60 is fixed to the center shaft 12a, and supports the stator core ST. The stator core ST is fixed to the support member 60. The stator core ST does not rotate relative to the support member 60 and the center shaft 12a. Although this embodiment describes a case where the synchronous drive motor SG includes the support member 60, the present invention is not limited to this example. It is also acceptable that the synchronous drive motor SG does not include the support member 60.

The support member 60 is a member made of iron formed as a single piece, and includes an outer cylindrical part 61, a coupling part 62, and an inner cylindrical part 63. The outer cylindrical part 61 has a cylindrical shape with an opening extending therethrough in the axial direction of the wheel 12. The stator core ST is provided at an outer periphery of the outer cylindrical part 61 with respect to the radial direction of the wheel 12.

The inner cylindrical part 63 has a cylindrical shape with an opening extending therethrough in the axial direction of the wheel 12. The center shaft 12a is passed through the opening of the inner cylindrical part 63, and the inner cylindrical part 63 is fixed to the center shaft 12a. In this manner, the support member 60 is fixed to the center shaft 12a.

The coupling part 62 is provided between the outer cylindrical part 61 and the inner cylindrical part 63. The coupling part 62 has an annular shape in a side view. In this embodiment, the support member 60 has a disk-like shape. Here, it may be also possible that the support member 60 has a through hole extending therethrough in the axial direction of the wheel 12 or has a rib extending in the radial direction of the wheel 12. The coupling part 62 may be configured as a plurality of spoke parts (solid spokes) that couple the outer cylindrical part 61 and the inner cylindrical part 63 to each other.

The stator 40 includes the stator core ST having an annular shape, and the windings W. The stator core ST is provided outside the support member 60 with respect to the radial direction of the wheel 12, and fixed to the support member 60. The stator core ST includes a base 44 having an annular shape and the plurality of teeth 43. The base 44 is located inside with respect to the radial direction of the wheel 12. The plurality of teeth 43 protrude outward from the base 44 with respect to the radial direction of the wheel 12. The base 44 functions as a yoke for preventing leakage of a magnetic force. The stator core ST and the support member 60 are electrically isolated from each other. This isolation serves to suppress an eddy current.

The stator core ST is obtained by, for example, thin silicon steel plates being stacked in the axial direction. The stator core ST includes a plurality of teeth 43 that integrally extend radially outward. The plurality of teeth 43 are spaced from one another by slots SL with respect to the circumferential direction. In this embodiment, thirty-six teeth 43 in total are arranged at intervals with respect to the circumferential direction. The stator core ST includes thirty-six teeth 43 in total. That is, the stator core ST of the synchronous drive motor SG includes six or more teeth 43. The teeth 43 are arranged with a constant pitch angle. Therefore, each tooth 43 is arranged at a pitch angle of 60° or less in mechanical angle. The number of teeth 43 is equal to the number of slots SL.

The winding W is wound on each tooth 43. The winding W is in the slot SL. All of the plurality of teeth 43 included in the stator core ST have portions on which windings are wound. The winding W belongs to any of U-phase, V-phase, and W-phase. The windings W are arranged in the order of U-phase, W-phase, and V-phase, for example. Since all of the plurality of teeth 43 have portions on which windings are wound, all of the teeth 43 are able to produce magnetic fluxes that contribute to a torque due to the current of the winding W. Therefore, a high torque is exerted.

In the stator core ST of the synchronous drive motor SG including six or more teeth 43, the amount (volume) of the windings W of the entire synchronous drive motor SG can be ensured sufficiently, with suppression of the number of turns of the winding of each tooth, which leads to suppression of an increase in the perimeter per turn of a wire constituting the winding. Accordingly, an increase in the amount (volume) of the winding W of each tooth can be suppressed while the amount (volume) of the windings W of the entire synchronous drive motor SG is ensured sufficiently. Thus, for example, increasing the number of turns of the winding or adopting a wire having a large diameter is allowed, with suppression of an increase in the size of the synchronous drive motor SG.

The rotor 30 includes the permanent magnet parts 37, the back yoke part 34, and the auxiliary yoke parts 35.

The permanent magnet parts 37 are arranged inside a spoke connection portion 12r of the hub part 12h and outside the stator core ST with respect to the radial direction of the wheel 12. The permanent magnet parts 37, each of which is opposed to the stator core ST, are arranged at intervals in the circumferential direction of the wheel 12. The auxiliary yoke part 35 is arranged in this interval. In this embodiment, the number of the permanent magnet parts 37 is forty-eight, which is larger than the number of the teeth 43. Thus, the number of magnetic poles in the permanent magnet parts 37 is forty-eight. In other words, the number of poles in the synchronous drive motor SG is forty-eight. The number of magnetic poles in the permanent magnet parts 37 (the number of poles in the electric motor) of the present invention is not particularly limited. It is not essential that the number of poles is equal to the number of magnet pieces. Each of the permanent magnet parts 37 has a pair of N pole and S pole (37i, 37o) (see FIG. 10(a)). Each of the permanent magnet parts 37 is arranged such that the S pole and the N pole are side by side with respect to the radial direction of the wheel 12, in other words, such that the S pole and the N pole are oriented in opposite directions with respect to the radial direction. The permanent magnet parts 37 are arranged at intervals in the circumferential direction of the wheel 12 in such a manner that the N pole and the S pole appear alternately.

The back yoke part 34 and the auxiliary yoke parts 35 are formed integrally with the hub part 12h. The hub part 12h, the rim part 12d, and the spoke part 12g are integrated with the back yoke part 34 and the auxiliary yoke parts 35, to form a single piece. The permanent magnet parts 37 are fixed to the hub part 12h with interposition of the back yoke part 34 therebetween. That is, the synchronous drive motor SG is fixed to the hub part 12h without interposition of any indirect power transmission mechanism (such as a belt, a chain, a gear, or a speed reducer). More specifically, outer circumferential surfaces 37a (see FIG. 10(a)) of the permanent magnet parts 37 are fixed to an inner circumferential surface of the hub part 12h with interposition of the back yoke part 34. The synchronous drive motor SG is an electric motor of direct drive type, and the permanent magnet parts 37, the back yoke part 34, and the auxiliary yoke parts 35 that constitute the rotor 30 rotate together with the hub part 12h around the rotation axis C of the wheel 12. Thus, when the synchronous drive motor SG is activated, the number of rotations of the permanent magnet part 37 is equal to the number of rotations of the hub part 12h, the spoke part 12g, and the rim part 12d. Since no indirect power transmission mechanism is interposed, a high efficiency of energy transmission to the hub part 12h is obtained.

The back yoke part 34 is provided opposite to magnet faces 37b of the permanent magnet parts 37 with respect to a direction of opposing between the stator core ST and the magnet faces 37b of the permanent magnet parts 37 (see FIG. 10(a)). The direction of opposing between the stator core ST and the magnet faces 37b corresponds to the radial direction Y of the synchronous drive motor SG of this embodiment. The back yoke part 34 is arranged inside the spoke connection portion 12r of the hub part 12h and outside the permanent magnet parts 37 and the auxiliary yoke parts 35 with respect to the radial direction of the wheel 12.

The auxiliary yoke parts 35, each of which is arranged in an interval between the permanent magnet parts 37 that are adjacent to each other with respect to the circumferential direction of the wheel 12, are opposed to the stator core ST. The auxiliary yoke parts 35 are arranged inside the outer circumferential surfaces 37a of the permanent magnet parts 37 and outside the stator core ST with respect to the radial direction of the wheel 12. The auxiliary yoke parts 35 cooperate with the stator core ST to produce an attractive force therebetween, thereby generating a reluctance torque. The circumferential width of the auxiliary yoke part 35 is not particularly limited. The circumferential width of the auxiliary yoke part 35 is, for example, smaller than the circumferential width of the permanent magnet part 37. The back yoke part 34 is a part having a cylindrical shape with an opening extending therethrough in the axial direction of the wheel 12. The auxiliary yoke parts 35 are parts that protrude from an inner circumferential surface of the back yoke part 34 toward the rotation axis C of the wheel 12. In this embodiment, the back yoke part 34 is integrated with the auxiliary yoke parts 35. That is, the auxiliary yoke parts 35 are provided to the back yoke part 34. The back yoke part 34 supports the permanent magnet parts 37. Each of the permanent magnet parts 37 may be directly supported on the back yoke part 34 by, for example, being fixed to the back yoke part 34. Each of the permanent magnet parts 37 may be indirectly supported on the back yoke part 34 by, for example, being fitted between adjacent auxiliary yoke parts 35. How the permanent magnet parts 37 are supported is not particularly limited. The rotor 30, together with the hub part 12h, rotating in a normal rotation direction T causes the wheel 12 (see FIG. 8) to rotate. The back yoke part 34 and the auxiliary yoke parts 35 are members made of a magnetic material. For example, they are made of iron. The back yoke part 34 and the auxiliary yoke parts 35 are integrally formed by, for example, thin silicon steel plates being stacked in the axial direction. The auxiliary yoke parts 35 are opposed to the teeth 43, and thus a large amount of magnetic fluxes caused by the currents of the windings W enter the auxiliary yoke parts 35. A stack of the steel plates serves to suppress an eddy current of the auxiliary yoke parts 35. The back yoke part 34 and the hub part 12h are electrically isolated from each other. This isolation serves to suppress an eddy current. It suffices that the back yoke part 34 and the auxiliary yoke parts 35 are made of a magnetic material, and they may be made of a compacted powder material based on iron, for example. Alternatively, the back yoke part 34 and the auxiliary yoke parts 35 may be formed by strip-like members made of a magnetic steel being rolled in the same manner as for the stator core ST.

In the synchronous drive motor SG according to this embodiment, as described above, the number P of magnet faces of the rotor 30 is forty-eight while the number of teeth 43 is thirty-six. The ratio of the number P of magnet faces of the rotor 30 to the number of teeth 43 is 4:3. That is, the number of magnet faces included in the rotor 30 is more than the number of teeth 43. The ratio of the number of magnet faces of the rotor 30 to the number of teeth 43 is not limited to this example. Non-limiting example of the upper limit of the ratio of the number P of magnet faces of the rotor 30 to the number of teeth 43 is 4/3. It is preferable that the number of magnetic faces included in the rotor 30 is equal to 4/3 of the number of teeth 43. Since the number of magnetic pole faces is a multiple of 2, alternately arranging the N pole and the S pole is easy. Since the number of teeth is a multiple of 3, a control based on a three-phase current is easy. Additionally, deviation is not likely to occur during rotation. In this embodiment, the number of magnet faces may be also called the number of magnetic poles.

In a case where the number of magnet faces included in the rotor 30 is 4/3 of the number of teeth 43, it is not necessary that the ratio of the number P of magnet faces of the rotor 30 to the number of teeth 43 is exactly 4:3. For example, in some cases, the slots SL of the stator 40 may be partially not formed, in order to allow a control board to be mounted to the stator 40. In such a case, the distance between some slots SL is different from the distance between other slots SL. That is, no slot SL is provided at a position though the slot SL is normally supposed to be provided at the position. In this case, it may be possible that the number of teeth 43 is determined on the assumption that the slot SL is provided at the position where the slot SL is normally supposed to be formed. The same applies to the number of magnetic poles of the rotor 30. To be specific, when magnetic poles and teeth are arranged so as to form a (4:3)-structure that satisfies the relationship that the ratio of the number of magnetic poles to the number of teeth is 4:3, it can be considered that the number of magnet faces included in the rotor 30 is substantially 4/3 of the number of teeth 43. In other words, it can be considered that the synchronous drive motor SG has, as its basic configuration, the configuration of a rotating electric machine having the (4:3)-structure. The same applies to a case where the synchronous drive motor SG has a ratio other than 4:3.

The synchronous drive motor SG is connected to a controller CT. The synchronous drive motor SG and the controller CT constitute a drive unit (not shown) for driving the wheel 12 that is an object to be driven. In other words, the drive unit includes the synchronous drive motor SG and the controller CT. The controller CT corresponds to the control device of the present invention. The controller CT may have a function as a driver. The controller CT may be connected to the synchronous drive motor SG via a driver.

The synchronous drive motor SG also includes sensors for detecting the phase of the rotating permanent magnet parts (ferrite magnets) 37.

In this embodiment, the synchronous drive motor SG includes three sensors 36A, 36B, and 36C. The sensors 36A to 36C are magnetic sensors composed of Hall elements. The sensors 36A to 36C detect the phase of the permanent magnet parts 37 that are rotating at a location outside the windings W with respect to the radial direction of the wheel 12. The sensors 36A to 36C output, to the controller CT, signals indicating results of the detection.

The controller CT controls the current supplied to the windings W of the stator 40. More specifically, the controller CT changes (e.g., increases or decreases) the current supplied to the winding of each of U-phase, V-phase, and W-phase. How to change the current is not particularly limited. In a possible example, sine-wave currents whose phases are shifted from one another may be supplied to the windings of respective phases, so that the current supplied to the winding of each phase is changed. In another possible example, square-wave currents whose phases are shifted from one another may be supplied to the windings of respective phases, so that the current supplied to the winding of each phase is changed (so-called 120° conduction). In this manner, the rotor 30 is rotated.

Each of the sensors 36A to 36C is provided in such a position that the phase of a permanent magnet part (ferrite magnet) 37 detected by each of the sensors 36A to 36C under the state where the rotor 30 is rotating is advanced relative to the phase of an induced voltage produced in the winding W by the permanent magnet part 37. Therefore, the current that the controller CT supplies to the winding W based on the timing of the signal given from each of the sensors 36A to 36C is advanced relative to the phase of the induced voltage produced in the winding W by the rotating permanent magnet part (ferrite magnet) 37. The advancing allows effective use of the reluctance torque exerted by the auxiliary yoke parts 35.

The phase of the induced voltage produced in the winding W by the permanent magnet part (ferrite magnet) 37 can be obtained by, for example, measuring the voltage during a time period in which energization to the winding W is not performed. Alternatively, the phase of the induced voltage produced in the winding W by the permanent magnet part (ferrite magnet) 37 can be obtained by, for example, measuring the voltage while rotating the wheel 12 due to an external force under the state where electrical driving is not performed, that is, under the state where the supply of the current from the controller CT to the winding W is not performed.

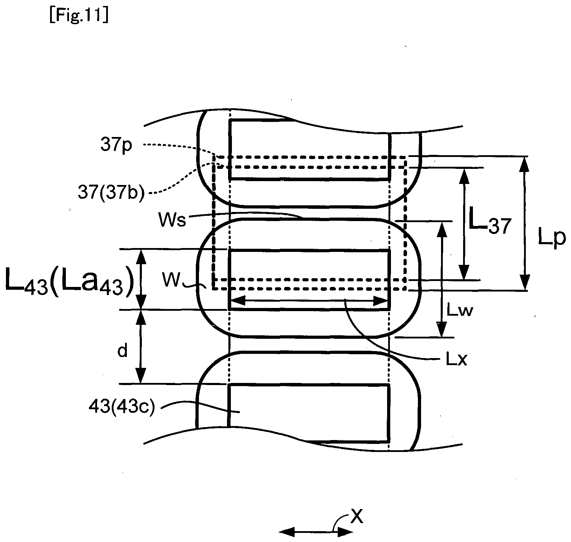

FIG. 10(a) is a cross-sectional view schematically showing, on an enlarged scale, the rotor 30 and the stator 40 in an example. FIG. 10(b) is a cross-sectional view showing, on an enlarged scale, the permanent magnet parts 37 and the vicinity thereof. FIG. 11 is a diagram schematically showing, on an enlarged scale, how the teeth 43 shown in FIG. 10(a) are arranged when viewed in the radial direction from the rotor 30. In other words, FIG. 11 schematically shows the distal end portions 43c of the teeth 43 as viewed in the direction extending from the distal end portions 43c of the teeth 43 toward proximal portions (located opposite to the distal end portions 43c) of the teeth 43. In a case of the synchronous drive motor SG of radial gap type as illustrated in this embodiment, the direction extending from the distal end portions 43c of the teeth 43 toward the proximal portions of the teeth 43 corresponds to, for example, the radial direction of the synchronous drive motor SG. In a case of the synchronous drive motor SG of axial gap type, the direction extending from the distal end portions 43c of the teeth 43 toward the proximal portions of the teeth 43 corresponds to, for example, the axial direction of the synchronous drive motor SG.

The rotor 30 includes the back yoke part 34, the auxiliary yoke parts 35, and the plurality of permanent magnet parts 37. The plurality of permanent magnet parts 37 are provided to the inner circumferential surface of the back yoke part 34 and arranged side by side in the circumferential direction.

In this embodiment, the permanent magnet part 37 is a ferrite magnet. In this embodiment, the permeance coefficient Pc of the permanent magnet part 37 provided in the rotor 30 is 10 or more. The permanent magnet part 37 which is a ferrite magnet has a relatively large radial thickness. The permanent magnet part 37 having a large radial thickness allows a large amount of magnetic fluxes from the permanent magnet part 37 to reach, via a gap G, the distal end portion 43c of the tooth 43 that is a surface of the tooth 43 opposed to the permanent magnet part 37. This enables the magnetic fluxes to efficiently pass through the stator core ST. In this embodiment, the radial thickness of the permanent magnet part 37 is greater than the radial thickness of the back yoke part 34. The radial thickness of the back yoke part 34 is greater than the radial thickness of the hub part 12h. The radial thickness H of the permanent magnet part 37 is not particularly limited. To be specific, the thickness H of the permanent magnet part 37 is, for example, preferably 4 mm or more, more preferably 5 mm or more, further preferably 6 mm or more, and particularly preferably 7 mm or more. The thickness H of the permanent magnet part 37 is preferably 15 mm or less, more preferably 12 mm or less, further preferably 10 mm or less, and particularly preferably 9 mm or less.

An innermost end 35a of the auxiliary yoke part 35, that is, the distal end of the auxiliary yoke part 35 protruding toward the rotation axis C, is located inner than the outer pole 37o of the permanent magnet part 37. In this embodiment, the innermost end 35a is an inner face of the auxiliary yoke part 35 with respect to the radial direction. The innermost end 35a of the auxiliary yoke part 35 is at least partially located inner than a center position 37c that is a position centrally between a magnet face 37b and a the magnet face 37a. The innermost end 35a of the auxiliary yoke part 35 is entirely located outer than the magnet face 37b with respect to the radial direction. The magnet face 37b of the permanent magnet part 37 is exposed to the inside with respect to the radial direction, and opposed to the tooth 43. The circumferential width of the innermost end 35a of the auxiliary yoke part 35 is, for example, smaller than a width L₃₇ of the magnet face 37b of the permanent magnet part 37 with respect to the circumferential direction of the synchronous drive motor SG. The circumferential width of the innermost end 35a of the auxiliary yoke part 35 is, for example, smaller than an inter-tooth gap d which will be described later. The circumferential width of the innermost end 35a of the auxiliary yoke part 35 is, for example, smaller than the width of the distal end portion 43c of the tooth 43 with respect to the circumferential direction of the synchronous drive motor SG. The magnet face 37b corresponds to one example of the magnet face of the present invention.

For example, the radial dimension of the auxiliary yoke part 35 is preferably 4 mm or more, more preferably 5 mm or more, further preferably 6 mm or more, and particularly preferably 7 mm or more. The radial dimension of the auxiliary yoke part 35 is preferably 15 mm or less, more preferably 12 mm or less, further preferably 10 mm or less, and particularly preferably 9 mm or less.

In this embodiment, a salient-pole ratio Lq/Ld of the permanent magnet part 37, the auxiliary yoke part 35, and the back yoke part 34 is 2 or more. The salient-pole ratio Lq/Ld means, when focused on one tooth 43, the ratio between an inductance Lq produced when the tooth 43 is exactly opposed to the auxiliary yoke part 35 and an inductance Ld produced when the tooth 43 is exactly opposed to the permanent magnet part 37. In the state where the tooth 43 is exactly opposed to the permanent magnet part 37, magnetic fluxes produced by the current of the winding W is likely to be interrupted by the permanent magnet part 37 having a low magnetic permeability.

In this embodiment, the permanent magnet part 37 provided in an in-wheel motor of direct drive type has a large radial thickness. That is, the back yoke part 34 is at a large distance from the tooth 43. This makes it likely that the effect of the magnetic fluxes produced by the current of the winding W is interrupted. In other words, in a case where the tooth 43 is exactly opposed to the permanent magnet part 37, there is a large distance to the back yoke part 34, and the permanent magnet part 37 is arranged between the tooth 43 and the back yoke part 34, which results in a high reluctance. Therefore, the inductance Ld is low. In a case where the tooth 43 is exactly opposed to the auxiliary yoke part 35, the reluctance is low. Therefore, the inductance Lq is high. The high salient-pole ratio of 2 or more ensures a higher reluctance torque.

Each tooth 43 includes a main portion 43a and a distal end portion 43c. The distal end portion 43c is opposed to the rotor 30. The slot SL is formed between ones of the teeth 43. The winding W is wound on the main portion 43a of each tooth 43. The main portion 43a shown in FIG. 10(a) corresponds to the portion wound with the winding of the present invention. The distal end portion 43c of the tooth 43 is opposed to the magnet face 37b provided outside the stator core ST. Therefore, the interval between the distal end portions of teeth 43 adjacent to each other is relatively wider than the interval between the proximal portions of the adjacent teeth 43.

The interval g shown in FIG. 10(a) is the interval between the rotor 30 and the stator 40 with respect to the radial direction of the synchronous drive motor SG. The interval g is equivalent to the interval between the magnet face 37b of the permanent magnet part 37 and the distal end portion 43c of the tooth 43 with respect to the radial direction of the synchronous drive motor SG. The inner circumferential surface of the permanent magnet part 37 has an arc-like shape with the convexity directed radially outward of the synchronous drive motor SG when seen along the rotation axis of the synchronous drive motor SG. The outer circumferential surface of the stator core ST has an arc-like shape with the convexity directed radially outward of the synchronous drive motor SG when seen along the rotation axis of the synchronous drive motor SG. The magnet face 37b (inner circumferential surface) of the permanent magnet part 37 is opposed to the outer circumferential surface of the stator core ST with the interval g therebetween. The inner circumferential surface of the permanent magnet part 37 is exposed to the interval g, but instead may be covered with a non-magnetic material. The inner circumferential surface of the permanent magnet part 37 is not covered with a magnetic material. That is, the magnet face 37b of the permanent magnet part 37 and the distal end portion 43c of the tooth 43 are opposed to each other with no magnetic material interposed therebetween. The value of the interval g is not particularly limited, and may be about 1 mm, for example. The inter-tooth gap d indicates the interval between the distal end portions 43c of the teeth 43 that are adjacent to each other with respect to the circumferential direction of the synchronous drive motor SG. The inter-tooth gap d corresponds to the gap between the distal end portions with respect to the circumferential direction of the present invention. The reference sign D2 denotes the distance between the winding W and the back yoke part 34 with respect to the radial direction of the synchronous drive motor SG. The reference sign L₃₇ denotes the width of the magnet face 37b of the permanent magnet part 37 with respect to the circumferential direction of the synchronous drive motor SG. The reference sign L₄₃ denotes the width of the distal end portion 43c of the tooth 43 with respect to the circumferential direction of the synchronous drive motor SG.

Referring to FIG. 11, the width Lw across an outer edge Ws of the winding W with respect to the circumferential direction (the maximum width of the winding W with respect to the circumferential direction) is larger than the circumferential width L₄₃ of the distal end portion 43c. Here, the outer edge Ws of the winding W with respect to the circumferential direction means a part of the outer edge of the winding W located outermost with respect to the circumferential direction of the synchronous drive motor SG. The outer edge Ws of the winding W with respect to the circumferential direction, for example, extends in the axial direction of the synchronous drive motor SG as shown in FIG. 11. The outer edge Ws of the winding W wound on the tooth 43 with respect to the circumferential direction is located outer than the outer edge of the distal end portion 43c of the tooth 43. As shown in FIG. 11, the outermost periphery of the winding W is located outer than the outer periphery of the distal end portion 43c, when the distal end portion 43c is viewed in the direction perpendicular to the rotation axis of the synchronous drive motor SG, and in other words, when the distal end portion 43c is viewed in the direction from infinity toward the center of the synchronous drive motor SG. As shown in FIG. 11, the thickness Lx of the distal end portion 43c of the tooth 43 with respect to the axial direction X is larger than the circumferential width L₄₃ of the distal end portion 43c. The axial thickness Lx of the main portion 43a of the tooth 43 is larger than the circumferential width La₄₃ of the main portion 43a. In this embodiment, the width Lw across the outer edge Ws of the winding W with respect to the circumferential direction is larger than the width L₃₇ of the magnet face. Thus, in this embodiment, the width L₃₇ of the magnet face is larger than the circumferential width L₄₃ of the distal end portion 43c and smaller than the width Lw across the outer edge Ws of the winding W with respect to the circumferential direction.

In the stator 40, the inter-tooth gap d between the distal end portions 43c of adjacent teeth 43 is larger than the circumferential width L₄₃ of the distal end portion 43c. Additionally, when the distal end portion 43c is seen along the rotation axis of the synchronous drive motor SG, the outer edge Ws of the winding W with respect to the circumferential direction is located outer than the outer edge of the distal end portion 43c of the tooth 43 with respect to the circumferential direction.

The rotor 30 rotates on the rotation axis of the synchronous drive motor SG at a location outside the stator 40 with respect to the radial direction of the synchronous drive motor SG, under a state where the magnet faces 37b, the number of which is more than the number of teeth 43, are opposed to the outer circumferential surface of the stator core ST. The rotation of the rotor 30 causes the magnet faces 37b, the number of which is more than the number of teeth 43, to run over the outer circumferential surface of the stator core ST.

The outer circumferential surface of the permanent magnet part 37 has an arc-like shape with the convexity directed radially outward of the synchronous drive motor SG when seen along the rotation axis of the synchronous drive motor SG. The inner circumferential surface of the back yoke part 34 has an arc-like shape with the convexity directed radially outward of the synchronous drive motor SG when seen along the rotation axis of the synchronous drive motor SG. The outer circumferential surface of the permanent magnet part 37 is in contact with the inner circumferential surface of the back yoke part 34. More specifically, the outer circumferential surface of the permanent magnet part 37 is, at least in a central portion thereof with respect to the circumferential direction, in contact with the inner circumferential surface of the back yoke part 34.

In the synchronous drive motor SG shown in FIG. 10(a), the interval between the distal end portions 43c of the teeth 43 that are adjacent to each other with respect to the circumferential direction of the synchronous drive motor SG is the inter-tooth gap d. The circumferential width L₄₃ of the distal end portion 43c of the tooth 43 is smaller than the sum Lp of the circumferential width L₃₇ of the magnet face 37b of the permanent magnet part 37 and the circumferential width of a distal end surface 35p of the auxiliary yoke part 35. That is, the inter-tooth gap d is set such that the circumferential width L₄₃ of the distal end portion 43c of the tooth 43 is smaller than the sum Lp of the circumferential width L₃₇ of the magnet face 37b of the permanent magnet part 37 and the circumferential width of the distal end surface 35p of the auxiliary yoke part 35. In this embodiment, as shown in FIG. 10(b), the distal end surface 35p of the auxiliary yoke part 35 is a surface defined at the same position as the position of the magnet face 37b with respect to the radial direction. The circumferential width of the distal end surface 35p of the auxiliary yoke part 35 means the width of the auxiliary yoke part 35 at the same position as the position of the magnet face 37b with respect to the radial direction. The sum Lp of the circumferential width L₃₇ of the magnet face 37b and the circumferential width of the distal end surface 35p of the auxiliary yoke part 35 corresponds to the circumferential width of a magnetic pole face of the synchronous drive motor SG. Thus, the sum Lp of the circumferential width L₃₇ of the magnet face 37b and the circumferential width of the distal end surface 35p of the auxiliary yoke part 35 is represented as the value obtained by the circumferential length of a surface of the rotor 30 opposed to the stator 40 being divided by the number of magnet faces.

FIG. 11 shows a region 37p that corresponds to the sum Lp of the circumferential width L₃₇ of the magnet face 37b and the circumferential width of the distal end surface 35p of the auxiliary yoke part 35. The region 37p corresponds to a magnetic pole face provided by the permanent magnet part 37. While the rotor 30 is rotating relative to the teeth 43, the area of a region of the distal end portion 43c of the tooth 43 opposed to each region 37p does not exceed the area of the distal end portion 43c of one tooth 43. For example, in the state illustrated in FIG. 11, one region 37p whose position is indicated by the broken line is opposed to two teeth 43 at one time. In the two teeth 43, regions opposed to the region 37p have a total area not exceeding the area of the distal end portion 43c of one tooth 43. This applies to all the regions 37p corresponding to all the permanent magnet parts 37.

In the synchronous drive motor SG of this embodiment, the circumferential width L₄₃ of the distal end portion 43c of the tooth 43 is smaller than the sum Lh of the circumferential width L₃₇ of the magnet face 37b of the permanent magnet part 37 and half the circumferential width of the distal end surface 35p of the auxiliary yoke part 35. In the synchronous drive motor SG of this embodiment, the circumferential width L₄₃ of the distal end portion 43c of the tooth 43 is smaller than the circumferential width L₃₇ of the magnet face 37b of the permanent magnet part 37.

In the synchronous drive motor SG of this embodiment, the number of magnet faces 37b is more than the number of teeth 43; the circumferential width L₄₃ of the distal end portion 43c of the tooth 43 is smaller than the sum Lp of the circumferential width L₃₇ of the magnet face 37b of the permanent magnet part 37 and the circumferential width of the distal end surface 35p of the auxiliary yoke part 35; and the auxiliary yoke parts 35 are provided in the intervals between the permanent magnet parts 37. This enables the synchronous drive motor SG of this embodiment to satisfy a high torque, a high output, and downsizing at a high level. The synchronous drive motor SG configured such that the number of magnet faces 37b is more than the number of teeth 43, such that the circumferential width L₄₃ of the distal end portion 43c of the tooth 43 is smaller than the circumferential width of the magnet face 37b, and such that the auxiliary yoke parts 35 are provided in the intervals between the permanent magnet parts 37 achieves downsizing, as compared with the conventional synchronous drive motor configured to provide the same output and the same torque as those of this synchronous drive motor SG. Accordingly, a high torque, a high output, and downsizing can be satisfied at a high level.

In the synchronous drive motor SG of this embodiment, the circumferential width L₄₃ of the distal end portion 43c of the tooth 43 is smaller than the sum Lh of the circumferential width L₃₇ of the magnet face 37b of the permanent magnet part 37 and half the circumferential width of the distal end surface 35p of the auxiliary yoke part 35. This further suppresses the degree of opposing between the tooth 43 and the auxiliary yoke part 35 at a time when a current flows through the winding W. Therefore, when a current flows through the winding W, a high reluctance torque is obtained due to the attractive force attracting the auxiliary yoke part 35 to the tooth 43.

In the synchronous drive motor SG of this embodiment, the circumferential width L₄₃ of the distal end portion 43c of the tooth 43 is smaller than the circumferential width L₃₇ of the magnet face 37b of the permanent magnet part 37. This further suppresses the degree of opposing between the tooth 43 and the auxiliary yoke part 35 at a time when a current flows through the winding W. In a case where the circumferential width L₄₃ of the distal end portion 43c of the tooth 43 is smaller than the circumferential width L₃₇ of the magnet face 37b of the permanent magnet part 37, a state where part of the distal end portion 43c is opposed to the auxiliary yoke part 35 and a state where any part of the distal end portion 43c is not opposed to the auxiliary yoke part 35 are created while the rotor 40 is rotating. A reluctance torque is obtained from an attractive force exerted when the state shifts from the state where any part of the distal end portion 43c is not opposed to the auxiliary yoke part 35 to the state where part of the distal end portion 43c is opposed to the auxiliary yoke part 35.

Here, stator magnetic fluxes directed from the tooth 43 toward the magnet face 37b will be further described with reference to FIG. 10(a). As the inter-tooth gap d increases, the leakage magnetic fluxes of the tooth 43 decrease. However, once the inter-tooth gap d exceeds the distance D2, a decrement of the leakage magnetic fluxes of the tooth 43 relative to an increment of the inter-tooth gap d is reduced. Accordingly, an increment of the stator magnetic fluxes relative to an increment of the inter-tooth gap d is also reduced.

Considering the above, it is preferable that the inter-tooth gap d is equal to or less than the distance D2. In such a case, it is preferable that the number of magnet faces 37b included in the rotor 30 is equal to or more than 4/3 of the number of teeth 43. It is particularly preferable that the number of magnet faces 37b included in the rotor 30 is 4/3 of the number of teeth 43. It is preferable that the circumferential width L₄₃ of the distal end portion 43c of the teeth 43 is larger than 1/3 of the circumferential width L₃₇ of the magnet face 37b.

It is preferable that the inter-tooth gap d is equal to or less than the circumferential width L₃₇ of the magnet face 37b of the permanent magnet part 37. It is preferable that the inter-tooth gap d is less than the circumferential width L₃₇ of the magnet face 37b of the permanent magnet part 37. It is preferable that the inter-tooth gap d is equal to or less than ten times the interval g. It is preferable that the inter-tooth gap d is equal to or more than three times the interval g. It is more preferable that the inter-tooth gap d is equal to or more than four times the interval g. It is further preferable that the inter-tooth gap d is equal to or more than five times the interval g. It is particularly preferable that the inter-tooth gap d is equal to or more than seven times the interval g. To be specific, the inter-tooth gap d is preferably equal to or less than 10 mm. The inter-tooth gap d is preferably equal to or more than 3 mm, more preferably equal to or more than 4 mm, further preferably equal to or more than 5 mm, and particularly preferably equal to or more than 7 mm.

In the synchronous drive motor SG of this embodiment, the width Lw across the outer edge Ws of the winding W with respect to the circumferential direction is larger than the circumferential width L₄₃ of the distal end portion 43c. Since the amount of the winding W wound on the tooth 43 is large, a higher torque and a higher output can be obtained. Preferably, as shown in FIG. 11, the outermost periphery of the winding W is located outer than the outer periphery of the distal end portion 43c, when the distal end portion 43c of the tooth 43 is viewed in the direction perpendicular to the rotation axis C of the synchronous drive motor SG, and in other words, when the distal end portion 43c of the tooth 43 is viewed from the magnet face 37b in the direction of opposing of the permanent magnet part 37 to the tooth 43.

In the example shown in FIG. 10(a), when the distal end portion 43c is viewed along the rotation axis C of the synchronous drive motor SG, the outer edge Ws of the winding W wound on the tooth 43 with respect to the circumferential direction is located outer than the outer edge of the distal end portion 43c of the tooth 43 with respect to the circumferential direction. In such a case, the amount of the winding W is further large. Therefore, a further higher torque and a further higher output can be obtained.

In the synchronous drive motor SG, the interval between the distal end portions 43c of the adjacent teeth 43 is relatively wider than the interval between the proximal portions (located opposite to the distal end portions 43c) of the adjacent teeth 43. This configuration further increases the degree of freedom in the arrangement of the winding W. Accordingly, a high torque and a high output can be obtained by increasing the amount of the winding W.

In the example shown in FIG. 10(a), while the rotor 30 is rotating relative to the teeth 43, the area of a region of the distal end portion 43c of the tooth 43 opposed to any magnet face 37b does not exceed the area of the distal end portion 43c of one tooth 43. This configuration suppresses occurrence of a situation where the magnetic fluxes produced by the magnet face 37b are distributed over a region wider than the area of the distal end portion 43c of one tooth 43. As a result, a decrease in the torque can be suppressed. It is preferable that the distal end portions 43c of all the teeth 43 have substantially the same circumferential width. It is preferable that the distal end portions 43c of all the teeth 43 are arranged at regular intervals or at substantially regular intervals with respect to the circumferential direction. In other words, it is preferable that all the inter-tooth gaps d have the same value. It is preferable that all the magnet faces 37b have substantially the same circumferential width.

In this embodiment, the circumferential width La₄₃ of the main portion 43a is equal to the circumferential width L₄₃ of the distal end portion 43c. Thus, as shown in FIG. 11, the circumferential width La₄₃ of the main portion 43a is smaller than the axial thickness Lx of the main portion 43a of the tooth 43. Therefore, the circumferential width of the slot SL can be ensured widely. This makes it possible to further increase the number of turns of the winding or to adopt a wire having a larger diameter to form the winding. As a result, a higher torque and a higher output can be obtained. In the synchronous drive motor SG, the circumferential width L₄₃ of the distal end portion 43c of the tooth 43 is smaller than the axial thickness Lx of the distal end portion 43c of the tooth 43. Therefore, the inter-tooth gap d can be ensured widely. Such a wide inter-tooth gap d enables further improvement of the degree of freedom in the design of the winding W. This makes it possible, for example, to further increase the number of turns of the winding or to adopt a wire having a larger diameter to form the winding. As a result, a higher torque and a higher output can be obtained.

In the synchronous drive motor SG, the number of magnet faces 37b included in the rotor 30 is more than the number of teeth 43, and the angular velocity ω is high because the number of magnetic poles is large. The high angular velocity ω results in a low detent torque.

In the synchronous drive motor SG, the permanent magnet part 37 is formed of a ferrite magnet. Magnetic characteristics of the ferrite magnet are lower than the magnetic characteristics of a rare-earth magnet. Thus, the ferrite magnet has a larger thickness than the thickness of the rare-earth magnet, for example. In the synchronous drive motor SG, moreover, the number of magnet faces 37b is more than the number of teeth 43, so that the circumferential width L₃₇ of the magnet face 37b is small. A combination of the large thickness and the small circumferential width gives a high permeance coefficient to the permanent magnet part 37. Accordingly, a higher torque and a higher output can be obtained.

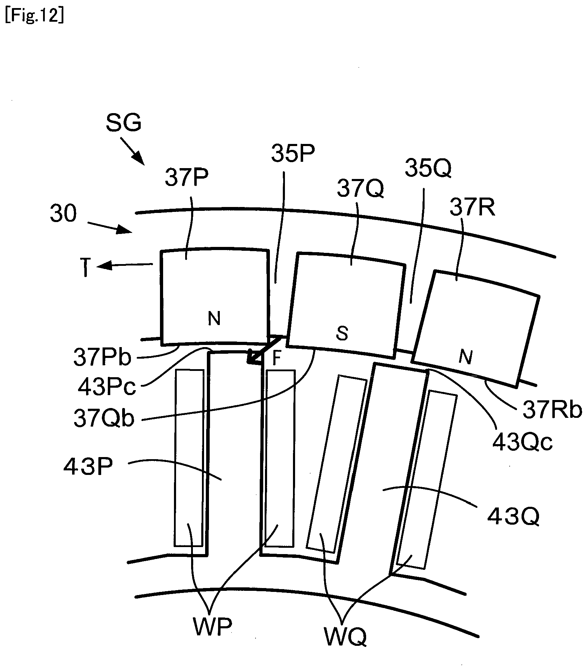

FIG. 12 is a diagram for explanation of operations of the teeth, the windings, the permanent magnet parts, and the auxiliary yoke parts shown in FIG. 10(a). In FIG. 12, the character P, Q, or R is added to the reference signs for discrimination among a plurality of elements.

When the auxiliary yoke part 35P located upstream of the tooth 43P with respect to the rotation direction T of the rotor 30 comes close to the tooth 43P, flowing a current through the winding WP wound on the tooth 43P causes a magnetic force (attractive force) F to occur between the tooth 43P and the auxiliary yoke part 35P. The attractive force F serves as a reluctance torque. At this time, the distal end portion 43Qc of another tooth 43Q is opposed to one auxiliary yoke part 35Q and two magnets faces 37Qb, 37Rb that are adjacent to the auxiliary yoke part 35Q. That is, in the synchronous drive motor SG shown in FIG. 12, a current flows through the winding WQ of the tooth 43Q. Under the state where the tooth 43Q is opposed to the auxiliary yoke part 35Q and the two magnets faces 37Qb, 37Rb adjacent to the auxiliary yoke part 35Q, a current is supplied to the winding WQ of the tooth 43Q, to change the state of the current in the winding WP of the tooth 43P different from the tooth 43Q.

In the example shown in FIG. 12, the magnet face 37Qb provides the S pole, and the other magnet face 37Rb provides the N pole that is opposite to the S pole provided by the magnet face 37Qb. Magnetic fluxes of the magnet 37Q and magnetic fluxes of the magnet 37R are inputted to the tooth 43Q, and interlinked with the winding WQ. In other words, magnetic fluxes caused by the current of the winding WQ interact with the magnetic fluxes of the magnet face 37Qb and the magnetic fluxes of the magnet face 37Rb. Upon flowing a current through the winding WQ wound on the tooth 43Q, for example, a repulsive force occurs between one magnet face 37Qb and the distal end portion 43Qc of the tooth 43Q while an attractive force occurs between the other magnet face 37Rb and the distal end portion 43Qc of the tooth 43Q. The repulsive force and the attractive force generate a magnet torque. Since the distal end portion 43Qc of the tooth 43Q is opposed to the auxiliary yoke part 35Q, a reluctance for the winding WQ is low. The amount of magnetic fluxes caused by the current of the winding WQ is larger as compared with a case where, for example, the tooth 43Q is not opposed to the auxiliary yoke part 35Q. That is, a larger amount of magnetic fluxes interact with the magnetic fluxes of the permanent magnet part 37Q and the magnetic fluxes of the permanent magnet part 37R. Accordingly, the magnet torque generated by the repulsive force produced between the magnet face 37Qb and the distal end portion 43Qc of the tooth 43Q and the attractive force produced between the magnet face 37Rb and the distal end portion 43Qc of the tooth 43Q is also increased. Thus, in this embodiment, the synchronous drive motor SG is configured such that a current is supplied to the winding WQ of the tooth 43Q at a time when the distal end portion 43Qc whose circumferential width is smaller than the circumferential width of the magnet face 37Qb, 37Rb is opposed to the auxiliary yoke part 35Q and the two magnets faces 37Qb, 37Rb adjacent to the auxiliary yoke part 35Q. The synchronous drive motor SG of this embodiment is able to increase the magnet torque due to the magnetic fluxes of the tooth 43Q caused by supply of the current to the winding WQ, as described above.

In the synchronous drive motor SG, the phase of the current supplied to the winding W wound on the tooth 43 (43P, 43Q) is advanced relative to the phase of the induced voltage produced in the winding W by the rotating permanent magnet part 37 (37P, 37Q, 37R). In this configuration, the attractive force F produced between the auxiliary yoke part 35P of the rotor 30 and the distal end portion 43Pc of the tooth 43P can be more effective used as a reluctance torque. The reluctance torque enables the synchronous drive motor SG to ensure a high torque.

In this embodiment, the controller CT supplies, to the winding W (WP, WQ), a current whose phase is advanced relative to the phase of the induced voltage produced in the winding W (WP, WQ) by the permanent magnet part 37 (37P, 37Q, 37R). The controller CT supplies a drive current including a d-axis current component so that the phase of the current supplied to the winding W (WP, WQ) is advanced relative to the phase of the induced voltage produced in the winding W (WP, WQ). A voltage caused by the d-axis current component reduces an influence of the induced voltage caused at a time of rotation. As a result, a torque at a time of high-speed rotation is improved.

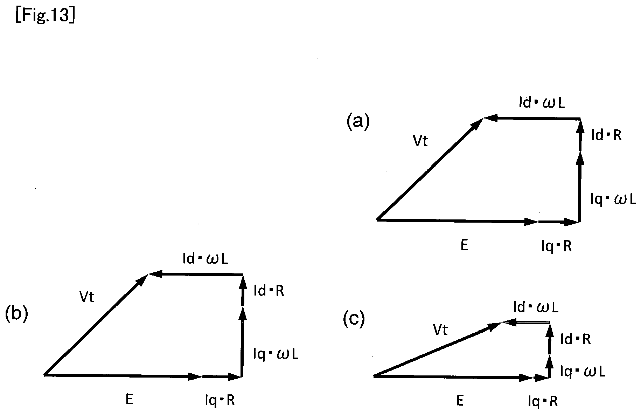

FIG. 13(a) is a vector diagram showing electrical characteristics in the synchronous drive motor SG of this embodiment. FIG. 13(b) is a vector diagram showing electrical characteristics in a conventional synchronous drive motor. FIG. 13(c) is a vector diagram showing electrical characteristics in a synchronous drive motor according to a comparative example.

In the synchronous drive motor SG of this embodiment shown in FIG. 13(a), the number of magnet faces is 4/3 of the number of teeth. In the conventional synchronous drive motor shown in FIG. 13(b), the number of magnet faces is 2/3 of the number of teeth. The angular velocity ω of the synchronous drive motor shown in FIG. 13(a) is twice the angular velocity ω of the conventional synchronous drive motor shown in FIG. 13(b).

In the synchronous drive motor SG of this embodiment shown in FIG. 13(a), as compared with the conventional synchronous drive motor shown in FIG. 13(b), the number of magnet faces is larger, so that the circumferential width of the magnet face is smaller. In the synchronous drive motor SG of this embodiment shown in FIG. 13(a), the circumferential width of the distal end portion of the tooth is smaller than the circumferential width of the magnet face. In contrast, in the conventional synchronous drive motor shown in FIG. 13(b), as compared with the synchronous drive motor SG of this embodiment shown in FIG. 13(a), a greater value is set as the circumferential width of the distal end portion of the tooth. The inductance L of the synchronous drive motor of this embodiment is 1/2 of the inductance L of the conventional synchronous drive motor shown in FIG. 13(b).

In the synchronous drive motor shown in FIG. 13(c), the number of magnet faces is 2/3 of the number of teeth. The angular velocity ω of the synchronous drive motor SG of this embodiment is twice the angular velocity ω of the synchronous drive motor according to the comparative example shown in FIG. 13(c).

In the synchronous drive motor according to the comparative example shown in FIG. 13(c), as compared with the conventional synchronous drive motor shown in FIG. 13(b), a lower value is set as the circumferential width of the distal end portion of the tooth. Accordingly, the inductance L of the synchronous drive motor shown in FIG. 13(c) is lower than the inductance L of the conventional synchronous drive motor shown in FIG. 13(b).

In each of the synchronous drive motors shown in FIG. 13(a) to FIG. 13(c), a drive current including a d-axis current component is supplied to the winding. In FIG. 13(a) to FIG. 13(c), the reference sign Vt denotes a terminal voltage of the synchronous drive motor. The reference sign E denotes an induced voltage. The reference sign Id denotes a d-axis (direct-axis) current. The reference sign Iq denotes a q-axis (quadrature-axis) current.

In general, the terminal voltage Vt of the synchronous drive motor has an upper limit because it is supplied from a power source such as a battery. An increase in the rotation speed of the rotor 30 leads to an increase in the induced voltage E of the winding W, which accordingly reduces a voltage margin for the supply of the q-axis current that contributes to the torque. In the synchronous drive motors shown in FIG. 13(a) to FIG. 13(c), the drive current including the d-axis current component is supplied to the winding. As a result, a voltage Id·ωL directed to cancel the induced voltage E occurs as shown in FIG. 13(a). Therefore, even though the induced voltage E is increased, the q-axis current that contributes to the torque can be supplied to the winding. In the examples shown in FIG. 13(a) to FIG. 13(c), the induced voltage E is higher than the terminal voltage Vt of the synchronous drive motor, but the q-axis current is supplied to the winding.

The angular velocity ω and the inductance L of the synchronous drive motor SG of this embodiment shown in FIG. 13(a) are twice the angular velocity ω and 1/2 of the inductance L of the conventional synchronous drive motor shown in FIG. 13(b). As a consequence, a voltage component (Id ·ωL) that suppresses an induced voltage is the same in the synchronous drive motor SG of this embodiment shown in FIG. 13(a) and in the conventional synchronous drive motor shown in FIG. 13(b). In other words, in the synchronous drive motor of this embodiment, the circumferential width of the distal end portion of the tooth is small so that the inductance L is low, but the angular velocity ω is high so that the voltage component (Id ·ωL) directed to cancel the induced voltage is ensured.

The angular velocity ω of the synchronous drive motor SG of this embodiment shown in FIG. 13(a) is twice the angular velocity ω of the synchronous drive motor according to the comparative example shown in FIG. 13(c). The inductance L of the synchronous drive motor SG of this embodiment shown in FIG. 13(a) is almost at the same level as the inductance L of the synchronous drive motor according to the comparative example shown in FIG. 13(c). This is why, in the synchronous drive motor according to the comparative example shown in FIG. 13(c), the voltage component (Id ·ωL) that suppresses the induced voltage is reduced. As a result, the q-axis current is reduced, too.

In the synchronous drive motor SG of this embodiment, on the other hand, the number of magnet faces included in the rotor 30 is more than the number of teeth, so that the angular velocity ω is high. Even when the d-axis current is low, the high angular velocity ω ensures the voltage component (Id ·ωL) that suppresses the induced voltage. Therefore, even though the induced voltage E is increased, the q-axis current that contributes to the torque can be supplied to the winding. Accordingly, the synchronous drive motor SG improves a torque at a time of high-speed rotation. As a method for supplying a drive current including a d-axis current component, for example, supplying a specified amount of d-axis current component based on a vector control (field-oriented control) or performing an advance angle control that substantially supplies a d-axis current component by advancing the phase of a drive current, are adoptable. A method for the advance angle control is not particularly limited, and a conventionally known method is adoptable.

The synchronous drive motor SG is able to, when the wheel 12 receives a force from the outside of the wheel 12 and rotates, function as a generator.

In the synchronous drive motor SG, when the circumferential width L₄₃ of the distal end portion 43c decreases so that the inter-tooth gap d increases, the inductance L decreases (see FIG. 3(b)). In the synchronous drive motor SG, however, the number of magnetic poles included in the rotor 30 is more than the number of teeth included in the stator 40 so that the angular velocity ω is high, which ensures a value of the AC component ωL of the impedance. There is no need to decrease the number of turns of the winding W in order to suppress a power generation current. Therefore, even when the inter-tooth gap d is increased so that the value of the inductance L decreases, further improvement of a torque at a time of starting is achieved without the need to largely increase the power generation current.

In the synchronous drive motor SG, as described above, the winding W is wound on the tooth 43. The winding W is arranged so as to be extending through the slot SL. In other words, a part of the winding W is in the slot SL. In the synchronous drive motor SG, the circumferential width L₄₃ of the distal end portion 43c of the tooth 43 is small so that the inter-tooth gap d is large, and therefore the degree of freedom of the design of the winding is high. A manner in which the winding W is wound may be either of concentrated winding and distributed winding. Although no particular limitation is put on the winding manner, the concentrated winding is preferable. An exemplary configuration of the winding W is as follows.

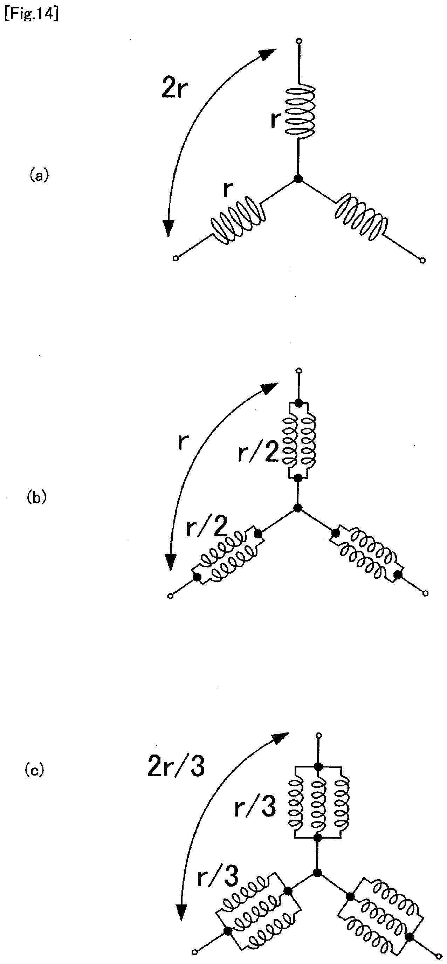

FIG. 14(a) to FIG. 14(c) are diagrams each schematically showing an example of connection of the windings W.

FIG. 14(a) shows star-connection (Y-connection). When a DC resistance of each phase is defined as r, a phase-to-phase resistance R is expressed as R = r+r = 2r. FIG. 14(b) shows parallel connection in which the winding of each phase shown in FIG. 14(a) includes two windings and the two windings are connected in parallel. The phase-to-phase resistance R is expressed as R = r/2+r/2 = r. FIG. 14(c) shows parallel connection in which the winding of each phase shown in FIG. 14(a) includes three windings and the three windings are connected in parallel. The phase-to-phase resistance R is expressed as R = r/3+r/3 = 2r/3.

In the present invention, any of the configurations shown in FIG. 14(a) to FIG. 14(c) is adoptable. In the present invention, however, the parallel connection is preferable in which the winding of each phase includes a plurality of windings that are connected in parallel. The reason therefor will be described below.

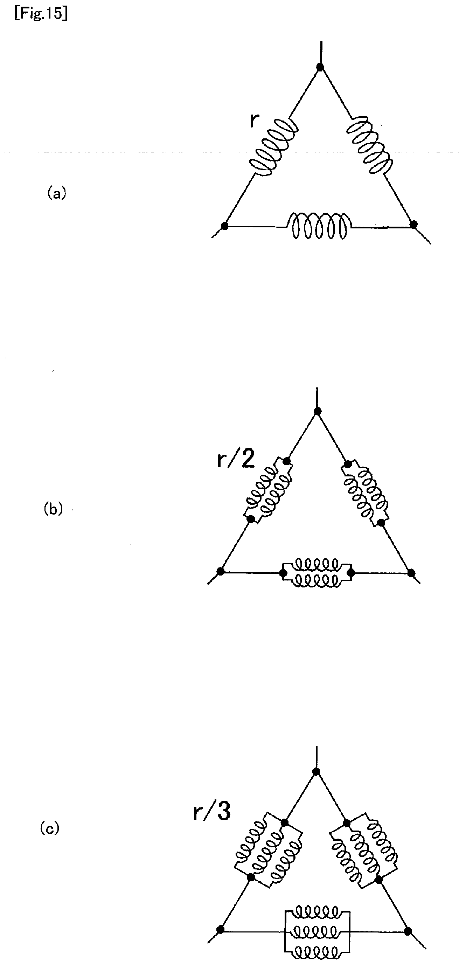

The present inventors have found out that a reduction in the DC resistance R in the impedance makes a relatively large contribution to improvement of the torque in a low-speed rotation region. Thus, setting the DC resistance R to a small value while setting the ωL to a large value as described above can more effectively ensure a high output torque in the low-speed rotation region. The parallel connection, in which the winding of each phase includes a plurality of windings that are connected in parallel as shown in FIG. 14(b) and FIG. 14(c), reduces the DC resistance R. As a result, a high output torque in the low-speed rotation region can be ensured more effectively. The number of windings that are connected in parallel is not limited to two and three. Four or more windings may be connected in parallel. It may be acceptable that both parallel connection and series connection exist in the winding of each phase. For example, it may be acceptable that the winding of each phase includes a plurality of winding sets in each of which a plurality of windings are connected in parallel, and the plurality of winding sets are connected in series with one another. The connection of the windings W is not limited to the examples shown in FIG. 14(a) to FIG. 14(c). Examples shown in FIG. 15(a) to FIG. 15(c) are also adoptable.

FIG. 15(a) to FIG. 15(c) are diagrams each schematically showing an example of connection of windings.

FIG. 15(a) shows delta-connection (Δ-connection). FIG. 15(b) shows parallel connection in which the winding of each phase shown in FIG. 15(a) includes two windings and the two windings are connected in parallel. FIG. 15(c) shows parallel connection in which the winding of each phase shown in FIG. 15(a) includes three windings and the three windings are connected in parallel. In a case of the delta-connection, the DC resistance R can be reduced because of the parallel connection in which the winding of each phase includes a plurality of windings that are connected in parallel, as in a case of the star-connection. The number of windings that are connected in parallel is not limited to two and three. Four or more windings may be connected in parallel.

In the present invention, either of the star-connection and the delta-connection is suitably adoptable, but the star-connection is more preferable for the following reasons: a circulating current is less likely to occur even when a difference in the induced voltage between the phases is caused due to, for example, the positional relationship of the stator 40 relative to the rotor 30 and a difference in the intensity of the magnetic pole of the permanent magnet part. Thus, the star-connection is less likely to cause a loss in power generation and enables more effective suppression of occurrence of an efficiency drop. In the present invention, the method for setting the DC resistance R in the impedance to a small value is not limited to the parallel connection mentioned above. For example, adoption of a winding whose cross-section has a large minimum width is conceivable. Since the winding W is arranged so as to be through the slot SL, the minimum width of the cross-section of the winding W can be increased within a range that allows the winding W to be through the slot SL.

In a normal electric motor, from the viewpoint of improvement of an output, it is preferable that the number of turns of a winding arranged so as to be through a slot (the number of times the winding is wound) is large so that the space factor of the winding within the slot is high. In a normal power generator as well, from the viewpoint of power generation efficiency, it is preferable that the number of turns of a winding arranged so as to be through a slot is large so that the space factor of the winding within the slot is high. Therefore, in the normal electric motor and power generator, the ratio of the minimum width (mm) of the cross-section of the winding to the inter-tooth gap d (mm) between distal end portions of teeth has been set to a low value.

In contrast, in the synchronous drive motor SG according to this embodiment, the rotor 30 has the magnet faces 37b that are formed on the inner circumferential surfaces of the permanent magnet parts 37 with respect to the radial direction of the synchronous drive motor SG and that are arranged side by side in the circumferential direction of the synchronous drive motor SG, and the number of the magnet faces 37b is more than the number of teeth 43. The synchronous drive motor SG has many magnet faces 37b that are arranged radially outward of the stator 40. The synchronous drive motor SG having such a configuration is able to ensure a higher output torque at a time of starting, at which the rotation speed is low, by increasing the minimum width (mm) of the cross-section of the winding relative to the inter-tooth gap d (mm) between the distal end portions 43c of the teeth 43. Increasing the minimum width of the cross-section of the winding relative to the inter-tooth gap d (mm) between the distal end portions 43c of the teeth 43 results in a reduction in the DC resistance R, which may cause a risk that the power generation current may increase when the synchronous drive motor SG functions as a generator. However, since the angular velocity ω is increased, the impedance at a time of high-speed rotation is ensured, and therefore an increase in the power generation current can be suppressed. Accordingly, both an increase in the output torque and suppression of the power generation current can be achieved.

In the synchronous drive motor SG according to this embodiment, the DC resistance R of the winding W can be reduced by adoption of the parallel connection or a wire having a large diameter. Therefore, a loss caused when a current flows through the winding can be reduced. For example, in a case where the synchronous drive motor SG functions as a generator, a current I flows through the winding W to cause a loss (I²R), but the low DC resistance R of the winding W can suppress the loss. Accordingly, a high efficiency is obtained when the synchronous drive motor SG functions as a generator.

To be specific, the ratio of the minimum width (mm) of the cross-section of the winding W to the inter-tooth gap d (mm) between the distal end portions 43c of the teeth 43 is preferably 0.1 or more, more preferably 0.16 or more, further preferably 0.3 or more, and particularly preferably 1/3 or more. In case where the cross-sectional shape of the winding W is a true circle, the diameter of the winding W is equivalent to the minimum width of the cross-section of the winding W. In a case where the cross-sectional shape of the winding W is an ellipse, the shorter diameter of the winding W is equivalent to the minimum width of the cross-section of the winding W. In a case where the winding W is formed of a flat rectangular wire, the length of the shorter side of the rectangular cross-section of the winding W is equivalent to the minimum width of the cross-section of the winding W. It may be acceptable to reduce the DC resistance R in the impedance by adopting a winding made of a material having a low DC resistance.

Next, a second embodiment of the present invention will be described.

In the following description of the second embodiment, the same elements as those of the first embodiment described above will be given the same corresponding reference signs, or will be given no reference sign. Differences from the above-described embodiment will be described.

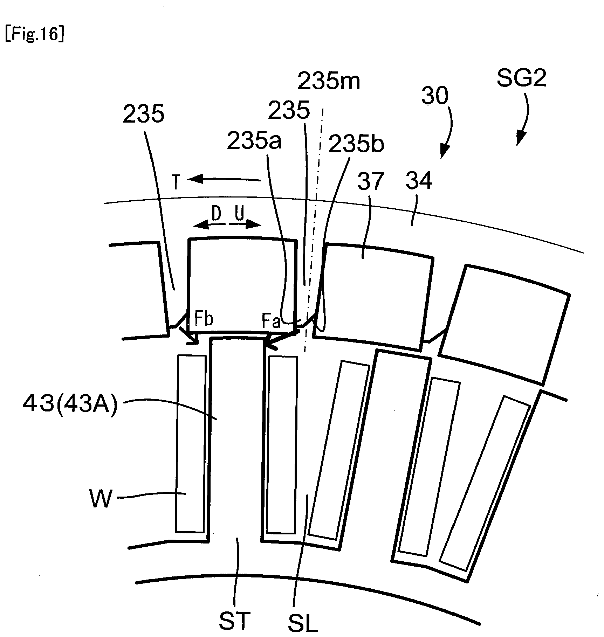

FIG. 16 is a diagram showing, on an enlarge scale, part of an exemplary synchronous drive motor SG2 according to the second embodiment.

The synchronous drive motor SG2 shown in FIG. 16 is configured to drive a wheel in one direction only. More specifically, the synchronous drive motor SG2 drives the wheel only in the normal rotation direction T. The volume of an auxiliary yoke part 235a is larger than the volume of an auxiliary yoke part 235b. The auxiliary yoke part 235a is positioned in the forward half of the interval between the permanent magnet parts 37 with respect to the normal rotation direction T. The auxiliary yoke part 235b is positioned in the rear half of the interval between the permanent magnet parts 37 with respect to the normal rotation direction T. The normal rotation direction T is a direction in which the rotor 30 rotates relative to the stator 40 of the synchronous drive motor SG2. A forward half portion of the auxiliary yoke part 235 is a downstream portion with respect to the normal rotation direction T. A rear half portion of the auxiliary yoke part 235 is an upstream portion with respect to the normal rotation direction T. To be specific, the forward half portion of the auxiliary yoke part 235 is a portion located downstream of a center plane 235m with respect to the normal rotation direction T and the rear half portion of the auxiliary yoke part 235 is a portion located upstream of the center plane 235m with respect to the normal rotation direction T. The center plane 235m is a plane passing through the center of the interval between two neighboring permanent magnet parts 37 with respect to the circumferential direction.

The auxiliary yoke part 235 has such a shape that a portion thereof opposed to the stator core ST at a location downstream of the center plane 235m is obliquely cut away. In other words, the innermost end of the auxiliary yoke part 235 with respect to the radial direction has a face that is inclined radially outward of the wheel. The face is provided downstream of the center plane 235m with respect to the normal rotation direction T. The shape of the auxiliary yoke part 235 is not limited thereto. For example, a step may be formed between the auxiliary yoke part 235a positioned in the forward half and the auxiliary yoke part 235b positioned in the rear half. The innermost end of the auxiliary yoke part 235 may have a curved surface. However, it is preferable that, in the side surfaces of the permanent magnet part 37 neighboring each other with respect to the circumferential direction, the side surface of the permanent magnet part 37 located forward with respect to the normal rotation direction T is at least partially in contact with the auxiliary yoke part 235. In other words, it is preferable that no gap is formed between the side surface of the permanent magnet part 37 and the auxiliary yoke part 35.

Here, one tooth 43 of the plurality of teeth 43 provided in the stator 240 will be focused. Among the plurality of auxiliary yoke parts 235, the auxiliary yoke part 235 located at the downstream side D of the tooth 43 with respect to the normal rotation direction T and the auxiliary yoke part 235 located at the upstream side U of the tooth 43 with respect to the normal rotation direction T are compared with each other under a state where magnetic fluxes caused by the winding W is occurring in the tooth 43. As a result, it is revealed that the auxiliary yoke part 235a having a larger volume, which is included in the auxiliary yoke part 235 located at the downstream side D, is closer to the tooth 43 than the auxiliary yoke part 235a included in the auxiliary yoke part 235 located at the upstream side U. Therefore, an attractive force Fa by which the auxiliary yoke part 235 at the upstream side U is attracted to the tooth 43 is stronger than an attractive force Fb by which the auxiliary yoke part 235 at the downstream side D is attracted to the tooth 43. The attractive force Fb attracting the auxiliary yoke part 235 at the downstream side D is a force that interrupts the rotation of the rotor 30 in the normal rotation direction T. In this embodiment, therefore, the force that interrupts the rotation of the rotor 30 in the normal rotation direction T is reduced, and the reluctance torque in the normal rotation direction T increases. Accordingly, a torque can be ensured more sufficiently.

Although some embodiments have been described in the above, these embodiments are only preferred embodiments of the present invention. It is obvious that those skilled in the art can readily make various modifications and changes to these embodiments. That is, the technical scope of the present invention should be defined based on the appended claims, and the present invention is not limited to these embodiments and may be modified, for example, as follows.

The controller CT of the present invention supplies a current to the winding W without changing the amount of advancing of the phase of the current supplied to the winding W relative to the phase of the permanent magnet part 37 detected by each of the sensors 36A to 36C. Alternatively, the control device according to the present invention may be configured to change the amount of advancing of the phase of the current supplied to the winding relative to the phase of the induced voltage produced in the winding W in accordance with, for example, the rotation speed of the synchronous drive motor. No particular limitation is put on the current that the control device supplies to the winding in the advance angle control. It may be either a sine wave or a square wave.

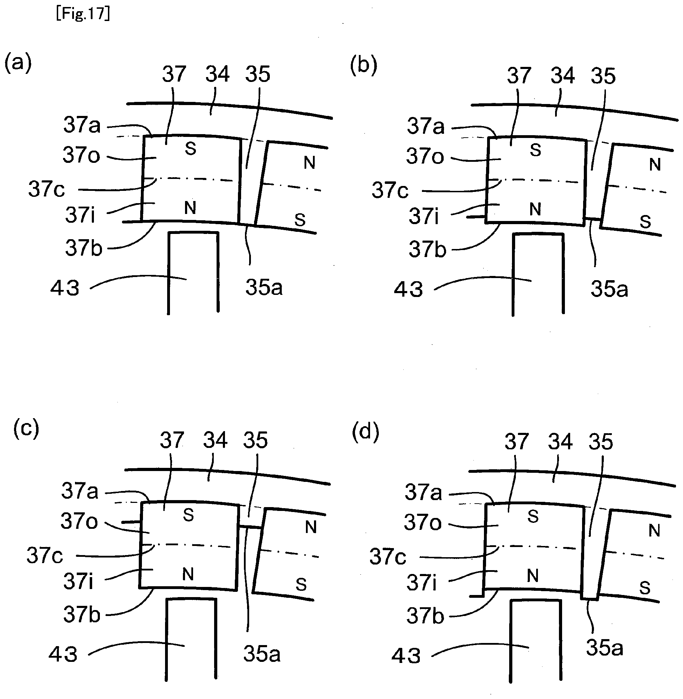

Although the above-described first embodiment illustrates an example case where the innermost end 35a of the auxiliary yoke part 35 is located outer than the magnet face 37b of the permanent magnet part 37 and inner than the center position 37c that is the position centrally between the magnet face 37b and the magnet face 37a of the permanent magnet part 37, the present invention is not limited to this example case. Examples shown in FIG. 17(a) to (d) may be adoptable as the auxiliary yoke part of the present invention.

FIG. 17(a), (b) and (d) are partial cross-sectional views showing, on an enlarged scale, embodiments of the auxiliary yoke part according to the present invention. In FIG. 17(a) to (d), the same configurations as the configurations shown in the drawings of the first embodiment are given the same reference signs as the reference signs given on the drawings of the first embodiment.

In the examples shown in FIG. 17(a) to (d), the innermost end 35a of the auxiliary yoke part 35 is located inner than the outer magnet face 37a of the permanent magnet part 37 (that is, inner than the magnet face 37a of the outer pole 37o) with respect to the radial direction of the wheel 12. In the examples shown in FIG. 17(a) to (d), the auxiliary yoke part 35 protrudes radially inward to different degrees. A specific description will be given below.

In the example shown in FIG. 17(a), the innermost end 35a of the auxiliary yoke part 35 is substantially at the same position as the position of the inner magnet face 37b of the permanent magnet part 37 (that is, the magnet face 37b of the inner pole 37i) with respect to the radial direction of the wheel 12.

In the example shown in FIG. 17(b), the innermost end 35a of the auxiliary yoke part 35 is at least partially located between the center position 37c and the magnet face 37b with respect to the radial direction of the wheel 12. The center position 37c is a position centrally between the magnet face 37b and the magnet face 37a with respect to the radial direction of the wheel 12. The entirety of the innermost end 35a of the auxiliary yoke part 35 is located outer than the magnet face 37b with respect to the radial direction of the wheel 12. The example shown in FIG. 17(b) illustrates an SPM rotor. The magnet face 37b of the permanent magnet part 37 is exposed to the radially inside, and opposed to the tooth 43. No magnetic body is provided between the magnet face 37b of the permanent magnet part 37 and the tooth 43.

In the example not being part of the invention which is shown in FIG. 17(c), the entirety of the innermost end 35a of the auxiliary yoke part 35 is located outer than the center position 37c with respect to the radial direction of the wheel 12.

In the example shown in FIG. 17(d), the innermost end 35a of the auxiliary yoke part 35 is at least partially (in FIG. 17(d), entirely) located inner than the magnet face 37b with respect to the radial direction of the wheel 12. However, the innermost end 35a of the auxiliary yoke part 35 is not in contact with the tooth 43 during rotation of the wheel 12, and does not hinder the rotation of the wheel 12.

In the present invention, it is desirable that, in a surface of the innermost end 35a of the auxiliary yoke part 35, at least a part positioned most inward with respect to the radial direction is located inner than the center position 37c that is the position centrally between the magnet face 37b and the magnet face 37a with respect to the radial direction of the wheel 12, as shown in FIG. 17(a), (b), and (d).

In the present invention, the permanent magnet part 37 is provided in an outer rotor in-wheel motor of direct drive type, which ensures that the permanent magnet part 37 has a large radial thickness. Since the auxiliary yoke part 35 protrudes inward beyond the center position 37c of the permanent magnet part 37 having such a large radial thickness, a high salient-pole ratio can be ensured. As a result, a higher reluctance torque can be obtained, and therefore a torque can be ensured more sufficiently. The entirety of the innermost end 35a of the auxiliary yoke part 35 may be located inner than the center position 37c, or only a part (that is, the part positioned most inward with respect to the radial direction) of the innermost end 35a of the auxiliary yoke part 35 may be located inner than the center position 37c.

In the present invention, it is desirable that, in the innermost end 35a of the auxiliary yoke part 35, at least the part positioned most inward with respect to the radial direction is located between the magnet face 37b and the center position 37c that is the position centrally between the magnet face 37b and the magnet face 37a with respect to the radial direction of the wheel 12, as shown in FIG. 17(b).

Such a configuration ensures a higher reluctance torque.

Furthermore, the entirety of the innermost end 35a of the auxiliary yoke part 35 is located outside the magnet face 37b. Thus, an interval (magnetic resistance) between the magnet face 37b of the permanent magnet part 37 and the innermost end 35a of the auxiliary yoke part 35 is ensured. This suppresses leakage, to the auxiliary yoke part 35, of magnetic fluxes directed from the magnet face 37b toward the tooth 43. Additionally, an interval (magnetic resistance) between the tooth 43 and the innermost end 35a of the auxiliary yoke part 35 is ensured. This suppresses leakage from the tooth 43 to the magnet face 37b of the permanent magnet part 37. Accordingly, a magnet torque can be ensured sufficiently. As a result, a torque can be ensured more sufficiently.

The entirety of the innermost end 35a of the auxiliary yoke part 35 may be located between the center position 37c and the magnet face 37b, or only a part (that is, the part positioned most inward with respect to the radial direction) of the innermost end 35a of the auxiliary yoke part 35 may be located between the center position 37c and the magnet face 37b.

In the present invention, it is desirable that, in the surface of the innermost end 35a of the auxiliary yoke part 35, at least the part positioned most inward with respect to the radial direction is at the same position or substantially at the same position as the position of the magnet face 37b with respect to the radial direction of the wheel 12, as shown in FIG. 17(a).

Such a configuration ensures a higher reluctance torque.

In this case, the entirety of the innermost end 35a of the auxiliary yoke part 35 may be at the same position or substantially at the same position as the position of the magnet face 37b, or only a part (that is, the part positioned most inward with respect to the radial direction) of the innermost end 35a of the auxiliary yoke part 35 may be at the same position or substantially at the same position as the position of the magnet face 37b. In this context, the expression "substantially at the same position" allows tolerances that normally can be set in the field of the present invention and any errors (for example, errors due to the accuracy of machining the auxiliary yoke part 35 and the accuracy of shaping the permanent magnet part 37) that normally can occur in the field of the present invention.

In the present invention, it is desirable that, in the surface of the innermost end 35a of the auxiliary yoke part 35, at least the part positioned most inward with respect to the radial direction is located inner than the magnet face 37b with respect to the radial direction of the wheel 12, as shown in FIG. 17(d).

Such a configuration ensures a higher reluctance torque.

Moreover, in a case where the back yoke part 34 and the auxiliary yoke part 35 are formed by performing a process (e.g., a stamping process) on a member made of a magnetic body (for example, a member made of iron), a higher accuracy of dimension can be obtained as compared with the permanent magnet part 37 that is a sintered magnet. In the example shown in FIG. 17(d), the auxiliary yoke part 35 having a high accuracy of dimension is located inner than the permanent magnet part 37 with respect to the radial direction of the wheel 12. This achieves a narrower interval between the auxiliary yoke part 35 and the tooth 43 while preventing occurrence of contact between the auxiliary yoke part 35 and the tooth 43 (stator core ST). In other words, this enables the auxiliary yoke part 35 to protrude radially inward to a high degree, while preventing occurrence of contact between the auxiliary yoke part 35 and the tooth 43. As a result, a higher reluctance torque is obtained.

Although the above-described embodiments illustrate a case where the salient-pole ratio Lq/Ld of the electric motor is 2 or more, the present invention is not limited to this example case. It suffices that the salient-pole ratio of the electric motor exceeds 1.

In the example having been described with reference to FIG. 10(a) and FIG. 11, the circumferential width La₄₃ of the main portion 43a of the tooth 43 is equal to the circumferential width L₄₃ of the distal end portion 43c of the tooth 43. Alternatively, the synchronous drive motor of the present invention may be configured such that the distal end portion of the tooth has protruding portions that protrude from the main portion toward opposite sides of the main portion with respect to the circumferential direction. In other words, the synchronous drive motor of the present invention may be configured such that the circumferential width of the distal end portion is larger than the circumferential width of the main portion.

Alternatively, the synchronous drive motor of the present invention may be configured such that the circumferential width of the distal end portion of the tooth is smaller than the circumferential width of a portion of the tooth having a maximum circumferential width. In such a case, the inter-tooth gap is large, and thus the degree of freedom in the design of the winding is further improved. For example, further increasing the number of turns of the winding or adopting a wire having a larger diameter is allowed. Accordingly, a higher torque and a higher output can be obtained.

The above-described embodiment adopts a ferrite magnet for the permanent magnet part. In the synchronous drive motor of the present invention, a rare-earth magnet is also adoptable for the permanent magnet part. For example, a Neodymium bonded magnet, a samarium-cobalt magnet, a neodymium magnet, and the like, are adoptable for the permanent magnet part. Since a rare-earth magnet has high magnetic characteristics, the thickness thereof is small. On the condition that the size of the synchronous drive motor is constant, providing a larger number of magnet faces than the number of teeth results in a smaller circumferential width of the magnet face. An effect that the permeance coefficient is increased due to the small circumferential width of the magnet face is highly exerted in a magnet having a small thickness. Use of a rare-earth magnet having high magnetic characteristics and obtaining of the effect of a high permeance coefficient are achieved. Accordingly, a high torque, a high output, and downsizing can be satisfied at a higher level.

In the synchronous drive motor described above, the permanent magnet part is arranged radially outside the stator. Instead, the synchronous drive motor of the present invention may be configured such that the permanent magnet part is arranged radially inside the stator. This configuration includes an inner rotor and an outer stator. In such a case, the distal end portion of the tooth is opposed to the magnet face arranged radially inside the stator. Therefore, an interval between adjacent teeth with respect to the circumferential direction decreases at a location closer to the distal end portion with respect to the radial direction. Such a configuration more highly exerts the effect that the degree of freedom in the arrangement of the winding is increased because the number of magnet faces is more than the number of teeth and the circumferential width of the distal end portion is smaller than the circumferential width of the magnet face. Thus, increasing the number of turns of the winding or adopting a wire having a large diameter is allowed. Accordingly, a high torque, a high output, and downsizing can be satisfied at a higher level.

Alternatively, the synchronous drive motor of the present invention may be configured such that the rotor is arranged with the magnet faces being opposed to the teeth with respect to the rotation axis direction. In such a configuration, the distal end portion of the tooth is opposed to the magnet face with respect to the rotation axis direction. Thus, the tooth extends in the rotation axis direction. This provides a high degree of freedom in the arrangement of the winding. Additionally, the effect that the degree of freedom in the arrangement of the winding is increased because the number of magnet faces is more than the number of teeth and the circumferential width of the distal end portion is smaller than the circumferential width of the magnet face is highly exerted. As a result, increasing the number of turns of the winding or adopting a wire having a large diameter is allowed. Accordingly, a high torque, a high output, and downsizing can be satisfied at a higher level.

The above-described embodiment illustrates, as an example of the synchronous drive motor of the present invention, a synchronous drive motor for driving a wheel of a vehicle. However, the synchronous drive motor of the present invention is not limited thereto, and it is applicable to, for example, a motor for starting an engine. The synchronous drive motor of the present invention is also applicable to a motor for driving a mechanism included in an industrial and consumer product. The synchronous drive motor of the present invention, which is mounted in machinery including an object to be driven and a battery, may be configured to receive a current supply from the battery and drive the object to be driven. The synchronous drive motor of the present invention, which is mounted in machinery including an object to be driven and connected to a battery, may be configured to receive a current supply from the battery and drive the object to be driven. The synchronous drive motor of the present invention is able to satisfy a high torque, a high output, and downsizing at a high level. Therefore, the synchronous drive motor of the present invention is suitable for use in a situation where the synchronous drive motor is driven by a battery. The synchronous drive motor of the present invention is suitable for use in a situation where it is mounted in machinery including an object to be driven. The object to be driven is not particularly limited, and may be a crankshaft of an engine, a wheel, and the like. The machinery is not particularly limited, and may be an engine unit, a vehicle, and the like.

Although the above-described embodiment illustrates the synchronous drive motor SG that functions as a generator, this is not limiting. The synchronous drive motor of the present invention may function as a motor only.

Although the above-described embodiment illustrates the synchronous drive motor SG including six or more teeth 43, no particular limitation is put on the number of teeth in the synchronous drive motor of the present invention. The synchronous drive motor of the present invention may include five or less teeth.

Although the above-described embodiment illustrates the example in which the axial thickness of the distal end portion is larger than the circumferential width thereof, the synchronous drive motor of the present invention is not limited thereto. The synchronous drive motor of the present invention may be configured such that the axial thickness of the distal end portion may be smaller than the circumferential width thereof.

Although the above-described embodiment illustrates the example in which, when viewed along the rotation axis, the outer edge of the winding wound on the tooth with respect to the circumferential direction is located outer than the outer edge of the distal end portion of the tooth with respect to the circumferential direction, the synchronous drive motor of the present invention is not limited thereto. The synchronous drive motor of the present invention may be configured such that the outer edge of the winding with respect to the circumferential direction is located inner than the outer edge of the distal end portion of the tooth with respect to the circumferential direction.

It should be understood that the terms and expressions used herein are for descriptions and have no intention to be construed in a limited manner, do not eliminate any equivalents of features shown and mentioned herein, and allow various modifications falling within the claimed scope of the present invention.

The present invention may be embodied in many different forms. The present disclosure is to be considered as providing examples of the principles of the invention. A number of illustrative embodiments are described herein with the understanding that such examples are not intended to limit the invention to preferred embodiments described herein and/or illustrated herein.

While some illustrative embodiments of the invention have been described herein, the present invention is not limited to the various preferred embodiments described herein. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

### Reference Signs List

- 30: rotor
- 34: back yoke part
- 35, 235: auxiliary yoke part
- 37: permanent magnet part
- 37b: magnet face
- 40, 240: stator
- 43: tooth
- 43c: distal end portion
- SG, SG2: synchronous drive motor
- SL: slot
- ST: stator core
- W: winding
- d: inter-tooth gap

## Claims

1. A synchronous drive motor (SG, SG2) comprising:
a stator (40, 240) including a stator core (ST) and windings (W), the stator core (ST) including a plurality of teeth (43) that are spaced from each other by a slot (SL) formed therebetween with respect to a circumferential direction, the winding (W) extending through the slot (SL), each of the plurality of teeth (43) including a portion wound with the winding (W); and
a rotor (30) including a plurality of permanent magnet parts (37), a back yoke part (34), and a plurality of auxiliary yoke parts (35, 235), the plurality of permanent magnet parts (37) being arranged at intervals in the circumferential direction, each of the plurality of permanent magnet parts (37) having a first magnet face (37b) facing the stator core (ST) and a second magnet face (37a) facing away from the stator core (ST), the back yoke part (34) supporting the plurality of permanent magnet parts (37), the back yoke part (34) being provided opposite to the first magnet faces (37b) of the plurality of permanent magnet parts (37) with respect to a direction in which the stator core (ST) and the first magnet faces (37b) are opposite to each other, the plurality of auxiliary yoke parts (35, 235) being provided to the back yoke part (34) and arranged in the intervals, the plurality of auxiliary yoke parts (35, 235) being opposed to the stator core (ST),
each of the plurality of teeth (43) including a distal end portion (43c) that is opposed to the first magnet face (37b), the distal end portion (43c) having a smaller circumferential width than the sum of a circumferential width of the first magnet face (37b) and a circumferential width of a distal end surface (35p) of the auxiliary yoke part (35, 235), the number of the first magnet faces (37b) being more than the number of the teeth (43),
wherein, in a surface of an innermost end (35a) of the auxiliary yoke part (35, 235), at least a part positioned most inward with respect to the radial direction is located inner than a center position (37c) that is a position centrally between the first and second magnet faces (37a, 37b) with respect to the radial direction,
wherein a gap between the distal end portions (43c) of the teeth (43) adjacent to each other with respect to the circumferential direction is larger than the circumferential width of the distal end portion (43c).

2. The synchronous drive motor (SG, SG2) according to claim 1, wherein
the distal end portion (43c) has a smaller circumferential width than the sum of the circumferential width of the first magnet face (37b) and half the circumferential width of the distal end surface (35p) of the auxiliary yoke part (35, 235).

3. The synchronous drive motor (SG, SG2) according to claim 1, wherein
the distal end portion (43c) has a smaller circumferential width than the circumferential width of the first magnet face (37b).

4. The synchronous drive motor (SG, SG2) according to any one of claims 1 to 3, wherein
the stator core (ST) includes six or more teeth (43),
each of the six or more teeth (43) includes a distal end portion (43c) that is opposed to the first magnet face (37b), and the distal end portion (43c) has a smaller circumferential width than the sum of the circumferential width of the first magnet face (37b) and the circumferential width of the distal end surface (35p) of the auxiliary yoke part (35, 235).

5. The synchronous drive motor (SG, SG2) according to any one of claims 1 to 4, wherein
the distal end portion (43c) has a smaller circumferential width than the sum of the circumferential width of the first magnet face (37b) and the circumferential width of the distal end surface (35p) of the auxiliary yoke part (35, 235) and than a circumferential width of a portion having the largest circumferential width of the tooth (43).

6. The synchronous drive motor (SG, SG2) according to any one of claims 1 to 5, wherein
the distal end portion (43c) has a smaller circumferential width than the sum of the circumferential width of the first magnet face (37b) and the circumferential width of the distal end surface (35p) of the auxiliary yoke part (35, 235), and the distal end portion (43c) has a larger axial thickness than the circumferential width of the distal end portion (43c).

7. The synchronous drive motor (SG, SG2) according to any one of claims 1 to 6, wherein
when the distal end portion (43c) is viewed along a rotation axis of the synchronous drive motor (SG, SG2), an outer edge (Ws) of the winding (W) wound on the tooth (43) with respect to the circumferential direction is located outer than an outer edge of the distal end portion (43c) of the tooth (43) with respect to the circumferential direction.

8. The synchronous drive motor (SG, SG2) according to any one of claims 1 to 7, wherein
the permanent magnet part (37) is arranged radially outside the stator (40, 240),
each of the teeth (43) includes a distal end portion (43c) that is opposed to the first magnet face (37b) arranged radially outside the stator (40, 240), and the distal end portion (43c) has a smaller circumferential width than the sum of the circumferential width of the first magnet face (37b) and the circumferential width of the distal end surface (35p) of the auxiliary yoke part (35, 235).

9. The synchronous drive motor according to any one of claims 1 to 7, wherein
the permanent magnet part is arranged radially inside the stator,
each of the teeth includes a distal end portion that is opposed to the first magnet face arranged radially inside the stator, and the distal end portion has a smaller circumferential width than the sum of the circumferential width of the first magnet face and the circumferential width of the distal end surface of the auxiliary yoke part.

10. The synchronous drive motor (SG, SG2) according to any one of claims 1 to 7, wherein
the rotor (30) is arranged with the first magnet faces (37b) being opposed to the teeth (43) with respect to a rotation axis direction of the rotor (30),
each of the teeth (43) includes a distal end portion (43c) that is opposed to the first magnet face (37b) with respect to the rotation axis direction, and the distal end portion (43c) has a smaller circumferential width than the sum of the circumferential width of the first magnet face (37b) and the circumferential width of the distal end surface (35p) of the auxiliary yoke part (35, 235).

11. The synchronous drive motor (SG, SG2) according to any one of claims 1 to 10, wherein
the permanent magnet part (37) is formed of a rare-earth magnet,
each of the teeth (43) includes a distal end portion (43c) that is opposed to the first magnet face (37b) formed by the rare-earth magnet, and the distal end portion (43c) has a smaller circumferential width than the sum of the circumferential width of the first magnet face (37b) and the circumferential width of the distal end surface (35p) of the auxiliary yoke part (35, 235).

12. The synchronous drive motor (SG, SG2) according to any one of claims 1 to 10, wherein
the permanent magnet part (37) is formed of a ferrite magnet,
each of the teeth (43) includes a distal end portion (43c) that is opposed to the first magnet face (37b) formed by the ferrite magnet, and the distal end portion (43c) has a smaller circumferential width than the sum of the circumferential width of the first magnet face (37b) and the circumferential width of the distal end surface (35p) of the auxiliary yoke part (35, 235).

13. The synchronous drive motor (SG, SG2) according to any one of claims 1 to 12, wherein each of the plurality of permanent magnet parts (37) has a pair of a N pole and a S pole (37i, 37o), wherein each of the plurality of permanent magnet parts (37) is arranged such that the S pole and the N pole are oriented in opposite directions with respect to a radial direction, wherein one of the first and second magnet faces (37a, 37b) provides the S pole and the other of the first and second magnet faces (37a, 37b) provides the N pole.

14. A drive unit comprising:
the synchronous drive motor (SG, SG2) according to any one of claims 1 to 13; and
a control device configured to supply, to the winding (W), a drive current that includes a d-axis current component.

## Patentansprüche

1. Ein synchroner Antriebsmotor (SG, SG2), der folgende Merkmale aufweist:
einen Stator (40, 240), der einen Statorkern (ST) und Wicklungen (W) umfasst, wobei der Statorkern (ST) eine Mehrzahl von Zähnen (43) umfasst, die voneinander durch einen Schlitz (SL) beabstandet sind, der bezüglich einer Umfangsrichtung zwischen denselben gebildet ist, wobei die Wicklung (W) sich durch den Schlitz (SL) erstreckt, wobei jeder der Mehrzahl von Zähnen (43) einen Abschnitt umfasst, der mit der Wicklung (W) gewickelt ist; und
einen Rotor (30), der eine Mehrzahl von Permanentmagnetbauteilen (37), ein hinteres Jochbauteil (34) und eine Mehrzahl von zusätzlichen Jochbauteilen (35, 235) umfasst, wobei die Mehrzahl von Permanentmagnetbauteilen (37) in der Umfangsrichtung in Abständen angeordnet ist, wobei jeder der Mehrzahl von Permanentmagnetbauteilen (37) eine erste Magnetfläche (37b), die dem Statorkern (ST) zugewandt ist, und eine zweite Magnetfläche (37a), die von dem Statorkern (ST) abgewandt ist, aufweist, wobei das hintere Jochbauteil (34) die Mehrzahl von Permanentmagnetbauteilen (37) trägt, wobei das hintere Jochbauteil (34) gegenüber den ersten Magnetflächen (37b) der Mehrzahl von Permanentmagnetbauteilen (37) bezüglich einer Richtung bereitgestellt ist, in der der Statorkern (ST) und die ersten Magnetflächen (37b) einander gegenüberliegen, wobei die Mehrzahl von zusätzlichen Jochbauteilen (35, 235) für das hintere Jochbauteil (34) bereitgestellt und in den Abständen angeordnet ist, wobei die Mehrzahl von zusätzlichen Jochbauteilen (35, 235) dem Statorkern (ST) gegenüberliegt,
wobei jeder der Mehrzahl von Zähnen (43) einen distalen Endabschnitt (43c) umfasst, der der ersten Magnetfläche (37b) gegenüberliegt, wobei der distale Endabschnitt (43c) eine kleinere Umfangsbreite als die Summe einer Umfangsbreite der ersten Magnetfläche (37b) und einer Umfangsbreite einer distalen Endoberfläche (35p) des zusätzlichen Jochbauteils (35, 235) aufweist, wobei die Anzahl der ersten Magnetflächen (37b) größer als die Anzahl der Zähne (43) ist,
wobei in einer Oberfläche eines innersten Endes (35a) des zusätzlichen Jochbauteils (35, 235) zumindest ein Bauteil, das bezüglich der Radialrichtung am weitesten innen positioniert ist, weiter innen als eine Mittenposition (37c) angeordnet ist, welches eine Position ist, die bezüglich der Radialrichtung zentral zwischen der ersten und zweiten Magnetfläche (37a, 37b) liegt,
wobei ein Zwischenraum zwischen den distalen Endabschnitten (43c) der Zähne (43), die bezüglich der Umfangsrichtung aneinander angrenzen, größer als die Umfangsbreite des distalen Endabschnitts (43c) ist.

2. Der synchrone Antriebsmotor (SG, SG2) gemäß Anspruch 1, bei dem
der distale Endabschnitt (43c) eine kleinere Umfangsbreite als die Summe der Umfangsbreite der ersten Magnetfläche (37b) und der halben Umfangsbreite der distalen Endoberfläche (35p) des zusätzlichen Jochbauteils (35, 235) aufweist.

3. Der synchrone Antriebsmotor (SG, SG2) gemäß Anspruch 1, bei dem
der distale Endabschnitt (43c) eine kleinere Umfangsbreite als die Umfangsbreite der ersten Magnetfläche (37b) aufweist.

4. Der synchrone Antriebsmotor (SG, SG2) gemäß einem der Ansprüche 1 bis 3, bei dem
der Statorkern (ST) sechs oder mehr Zähne (43) aufweist,
jeder der sechs oder mehr Zähne (43) einen distalen Endabschnitt (43c) umfasst, der der ersten Magnetfläche (37b) gegenüberliegt, und der distale Endabschnitt (43c) eine kleinere Umfangsbreite als die Summe der Umfangsbreite der ersten Magnetfläche (37b) und der Umfangsbreite der distalen Endoberfläche (35p) des zusätzlichen Jochbauteils (35, 235) aufweist.

5. Der synchrone Antriebsmotor (SG, SG2) gemäß einem der Ansprüche 1 bis 4, bei dem
der distale Endabschnitt (43c) eine kleinere Umfangsbreite als die Summe der Umfangsbreite der ersten Magnetfläche (37b) und der Umfangsbreite der distalen Endoberfläche (35p) des zusätzlichen Jochbauteils (35, 235) und als eine Umfangsbreite eines Abschnitts des Zahnes (43) mit der größten Umfangsbreite.

6. Der synchrone Antriebsmotor (SG, SG2) gemäß einem der Ansprüche 1 bis 5, bei dem
der distale Endabschnitt (43c) eine kleinere Umfangsbreite als die Summe der Umfangsbreite der ersten Magnetfläche (37b) und der Umfangsbreite der distalen Endoberfläche (35p) des zusätzlichen Jochbauteils (35, 235) aufweist und der distale Endabschnitt (43c) eine größere axiale Dicke als die Umfangsbreite des distalen Endabschnitts (43c) aufweist.

7. Der synchrone Antriebsmotor (SG, SG2) gemäß einem der Ansprüche 1 bis 6, bei dem
wenn der distale Endabschnitt (43c) entlang einer Drehachse des synchronen Antriebsmotors (SG, SG2) betrachtet wird, ein Außenrand (Ws) der auf den Zahn (43) gewickelten Wicklung (W) bezüglich der Umfangsrichtung weiter außen als ein Außenrand des distalen Endabschnitts (43c) des Zahnes (43) bezüglich der Umfangsrichtung liegt.

8. Der synchrone Antriebsmotor (SG, SG2) gemäß einem der Ansprüche 1 bis 7, bei dem
das Permanentmagnetbauteil (37) radial außerhalb des Stators (40, 240) angeordnet ist,
jeder der Zähne (43) einen distalen Endabschnitt (43c) umfasst, der der ersten Magnetfläche (37b) gegenüberliegt, die radial außerhalb des Stators (40, 240) angeordnet ist, und der distale Endabschnitt (43c) eine kleinere Umfangsbreite als die Summe der Umfangsbreite der ersten Magnetfläche (37b) und der Umfangsbreite der distalen Endoberfläche (35p) des zusätzlichen Jochbauteils (35, 235) aufweist.

9. Der synchrone Antriebsmotor (SG, SG2) gemäß einem der Ansprüche 1 bis 7, bei dem
das Permanentmagnetbauteil radial innerhalb des Stators angeordnet ist,
jeder der Zähne einen distalen Endabschnitt umfasst, der der ersten Magnetfläche gegenüberliegt, die radial innerhalb des Stators angeordnet ist, und der distale Endabschnitt eine kleinere Umfangsbreite als die Summe der Umfangsbreite der ersten Magnetfläche und der Umfangsbreite der distalen Endoberfläche des zusätzlichen Jochbauteils aufweist.

10. Der synchrone Antriebsmotor (SG, SG2) gemäß einem der Ansprüche 1 bis 7, bei dem
der Rotor (30) so angeordnet ist, dass die ersten Magnetflächen (37b) den Zähnen (43) bezüglich einer Drehachsenrichtung des Rotors (30) gegenüberliegen,
jeder der Zähne (43) einen distalen Endabschnitt (43c) umfasst, der der ersten Magnetfläche (37b) bezüglich der Drehachsenrichtung gegenüberliegt, und der distale Endabschnitt (43c) eine kleinere Umfangsbreite als die Summe der Umfangsbreite der ersten Magnetfläche (37b) und der Umfangsbreite der distalen Endoberfläche (35p) des zusätzlichen Jochbauteils (35, 235) aufweist.

11. Der synchrone Antriebsmotor (SG, SG2) gemäß einem der Ansprüche 1 bis 10, bei dem
das Permanentmagnetbauteil (37) aus einem Seltenerdmagneten gebildet ist,
jeder der Zähne (43) einen distalen Endabschnitt (43c) umfasst, der der ersten Magnetfläche (37b) gegenüberliegt, die durch den Seltenerdmagneten gebildet ist, und der distale Endabschnitt (43c) eine kleinere Umfangsbreite als die Summe der Umfangsbreite der ersten Magnetfläche (37b) und der Umfangsbreite der distalen Endoberfläche (35p) des zusätzlichen Jochbauteils (35, 235) aufweist.

12. Der synchrone Antriebsmotor (SG, SG2) gemäß einem der Ansprüche 1 bis 10, bei dem
das Permanentmagnetbauteil (37) aus einem Ferritmagneten gebildet ist,
jeder der Zähne (43) einen distalen Endabschnitt (43c) umfasst, der der ersten Magnetfläche (37b) gegenüberliegt, die durch den Ferritmagneten gebildet ist, und der distale Endabschnitt (43c) eine kleinere Umfangsbreite als die Summe der Umfangsbreite der ersten Magnetfläche (37b) und der Umfangsbreite der distalen Endoberfläche (35p) des zusätzlichen Jochbauteils (35, 235) aufweist.

13. Der synchrone Antriebsmotor (SG, SG2) gemäß einem der Ansprüche 1 bis 12, bei dem jeder der Mehrzahl von Permanentmagnetbauteilen (37) ein Paar aus einem N-Pol und einem S-Pol (37i, 37o) aufweist, wobei jeder der Mehrzahl von Permanentmagnetbauteilen (37) so angeordnet ist, dass der S-Pol und der N-Pol bezüglich einer Radialrichtung in entgegengesetzten Richtungen ausgerichtet sind, wobei eine der ersten und der zweiten Magnetfläche (37a, 37b) den S-Pol bereitstellt und die andere der ersten und der zweiten Magnetfläche (37a, 37b) den N-Pol bereitstellt.

14. Eine Antriebseinheit, die folgende Merkmale aufweist:
den synchronen Antriebsmotor (SG, SG2) gemäß einem der Ansprüche 1 bis 13 und
eine Steuervorrichtung, die dazu konfiguriert ist, der Wicklung (W) einen Antriebsstrom zuzuführen, der eine Komponente eines Direktachse-Stroms umfasst.

## Revendications

1. Moteur à entraînement synchrone (SG, SG2) comprenant:
un stator (40, 240) comportant un noyau de stator (ST) et des enroulements (W), le noyau de stator (ST) comportant une pluralité de dents (43) qui sont espacées l'une de l'autre par une fente (SL) formée entre elles par rapport à une direction circonférentielle, l'enroulement (W) s'étendant à travers la fente (SL), chacune de la pluralité de dents (43) comportant une partie enroulée avec l'enroulement (W); et
un rotor (30) comportant une pluralité de parties d'aimant permanent (37), une partie d'empiècement arrière (34) et une pluralité de parties d'empiècement auxiliaire (35, 235), la pluralité de parties d'aimant permanent (37) étant disposées à des intervalles dans la direction circonférentielle, chacune de la pluralité de parties d'aimant permanent (37) présentant une première face d'aimant (37b) faisant face au noyau de stator (ST) et une deuxième face d'aimant (37a) opposée au noyau de stator (ST), la partie d'empiècement arrière (34) supportant la pluralité de parties d'aimant permanent (37), la partie d'empiècement arrière (34) étant prévue opposée aux premières faces d'aimant (37b) de la pluralité de parties d'aimant permanent (37) par rapport à une direction dans laquelle le noyau de stator (ST) et les premières faces d'aimant (37b) sont opposés l'un à l'autre, la pluralité de parties d'empiècement auxiliaire (35, 235) étant prévues pour la partie d'empiècement arrière (34) et disposées dans les intervalles, la pluralité de parties d'empiècement auxiliaire (35, 235) étant opposées au noyau de stator (ST),
chacune de la pluralité de dents (43) comportant une partie d'extrémité distale (43c) qui est opposée à la première face d'aimant (37b), la partie d'extrémité distale (43c) présentant une largeur circonférentielle inférieure à la somme d'une largeur circonférentielle de la première face d'aimant (37b) et d'une largeur circonférentielle d'une surface d'extrémité distale (35p) de la partie d'empiècement auxiliaire (35, 235), le nombre des premières faces d'aimant (37b) étant supérieur au nombre des dents (43),
dans lequel, dans une surface d'une extrémité la plus à l'intérieur (35a) de la partie d'empiècement auxiliaire (35, 235), au moins une partie positionnée la plus à l'intérieur par rapport à la direction radiale est située plus à l'intérieur qu'une position centrale (37c) qui est une position centrale entre les première et deuxième faces d'aimant (37a, 37b) par rapport à la direction radiale,
dans lequel un interstice entre les parties d'extrémité distales (43c) des dents (43) adjacentes l'une à l'autre par rapport à la direction circonférentielle est plus grand que la largeur circonférentielle de la partie d'extrémité distale (43c).

2. Moteur à entraînement synchrone (SG, SG2) selon la revendication 1, dans lequel
la partie d'extrémité distale (43c) présente une largeur circonférentielle inférieure à la somme de la largeur circonférentielle de la première face d'aimant (37b) et de la moitié de la largeur circonférentielle de la surface d'extrémité distale (35p) de la partie d'empiècement auxiliaire (35, 235).

3. Moteur à entraînement synchrone (SG, SG2) selon la revendication 1, dans lequel
la partie d'extrémité distale (43c) présente une largeur circonférentielle inférieure à la largeur circonférentielle de la première face d'aimant (37b).

4. Moteur à entraînement synchrone (SG, SG2) selon l'une quelconque des revendications 1 à 3, dans lequel
le noyau de stator (ST) comporte six dents ou plus (43),
chacune des six dents ou plus (43) comporte une partie d'extrémité distale (43c) qui est opposée à la première face d'aimant (37b), et la partie d'extrémité distale (43c) présente une largeur circonférentielle inférieure à la somme de la largeur circonférentielle de la première face d'aimant (37b) et de la largeur circonférentielle de la surface d'extrémité distale (35p) de la partie d'empiècement auxiliaire (35, 235).

5. Moteur à entraînement synchrone (SG, SG2) selon l'une quelconque des revendications 1 à 4, dans lequel
la partie d'extrémité distale (43c) présente une largeur circonférentielle inférieure à la somme de la largeur circonférentielle de la première face d'aimant (37b) et de la largeur circonférentielle de la surface d'extrémité distale (35p) de la partie d'empiècement auxiliaire (35, 235) et à largeur circonférentielle d'une partie présentant la largeur circonférentielle la plus grande de la dent (43).

6. Moteur à entraînement synchrone (SG, SG2) selon l'une quelconque des revendications 1 à 5, dans lequel
la partie d'extrémité distale (43c) présente une largeur circonférentielle inférieure à la somme de la largeur circonférentielle de la première face d'aimant (37b) et de la largeur circonférentielle de la surface d'extrémité distale (35p) de la partie d'empiècement auxiliaire (35, 235), et la partie d'extrémité distale (43c) présente une épaisseur axiale supérieure à la largeur circonférentielle de la partie d'extrémité distale (43c).

7. Moteur à entraînement synchrone (SG, SG2) selon l'une quelconque des revendications 1 à 6, dans lequel
lorsque la partie d'extrémité distale (43c) est vue le long d'un axe de rotation du moteur d'entraînement synchrone (SG, SG2), un bord extérieur (Ws) de l'enroulement (W) enroulé sur la dent (43) par rapport à la direction circonférentielle est situé plus à l'extérieur qu'un bord extérieur de la partie d'extrémité distale (43c) de la dent (43) par rapport à la direction circonférentielle.

8. Moteur à entraînement synchrone (SG, SG2) selon l'une quelconque des revendications 1 à 7, dans lequel
la partie d'aimant permanent (37) est disposée radialement à l'extérieur du stator (40, 240),
chacune des dents (43) comporte une partie d'extrémité distale (43c) qui est opposée à la première face d'aimant (37b) disposée radialement à l'extérieur du stator (40, 240), et la partie d'extrémité distale (43c) présente une largeur circonférentielle inférieure à la somme de la largeur circonférentielle de la première face d'aimant (37b) et de la largeur circonférentielle de la surface d'extrémité distale (35p) de la partie d'empiècement auxiliaire (35, 235).

9. Moteur à entraînement synchrone selon l'une quelconque des revendications 1 à 7, dans lequel
la partie d'aimant permanent est disposée radialement à l'intérieur du stator,
chacune des dents comporte une partie d'extrémité distale qui est opposée à la première face d'aimant disposée radialement à l'intérieur du stator, et la partie d'extrémité distale présente une largeur circonférentielle inférieure à la somme de la largeur circonférentielle de la première face d'aimant et de la largeur circonférentielle de la surface d'extrémité distale de la partie d'empiècement auxiliaire.

10. Moteur à entraînement synchrone (SG, SG2) selon l'une quelconque des revendications 1 à 7, dans lequel
le rotor (30) est disposé avec les premières faces d'aimant (37b) opposées aux dents (43) par rapport à la direction de l'axe de rotation du rotor (30),
chacune des dents (43) comporte une partie d'extrémité distale (43c) qui est opposée à la première face d'aimant (37b) par rapport à la direction de l'axe de rotation, et la partie d'extrémité distale (43c) présente une largeur circonférentielle inférieure à la somme de la largeur circonférentielle de la première face d'aimant (37b) et de la largeur circonférentielle de la surface d'extrémité distale (35p) de la partie d'empiècement auxiliaire (35, 235).

11. Moteur à entraînement synchrone (SG, SG2) selon l'une quelconque des revendications 1 à 10, dans lequel
la partie d'aimant permanent (37) est formée d'un aimant de terres rares,
chacune des dents (43) comporte une partie d'extrémité distale (43c) qui est opposée à la première face d'aimant (37b) formée par l'aimant de terres rares, et la partie d'extrémité distale (43c) présente une largeur circonférentielle inférieure à la somme de la largeur circonférentielle de la première face d'aimant (37b) et de la largeur circonférentielle de la surface d'extrémité distale (35p) de la partie d'empiècement auxiliaire (35, 235).

12. Moteur à entraînement synchrone (SG, SG2) selon l'une quelconque des revendications 1 à 10, dans lequel
la partie d'aimant permanent (37) est formée d'un aimant de ferrite,
chacune des dents (43) comporte une partie d'extrémité distale (43c) qui est opposée à la première face d'aimant (37b) formée par l'aimant de ferrite, et l'extrémité distale la partie (43c) présente une largeur circonférentielle inférieure à la somme de la largeur circonférentielle de la première face d'aimant (37b) et de la largeur circonférentielle de la surface d'extrémité distale (35p) de la partie d'empiècement auxiliaire (35, 235).

13. Moteur à entraînement synchrone (SG, SG2) selon l'une quelconque des revendications 1 à 12, dans lequel chacune de la pluralité de parties d'aimant permanent (37) présente une paire d'un pôle N et d'un pôle S (37i, 37o), dans lequel chacune de la pluralité de parties d'aimant permanent (37) est disposée de sorte que le pôle S et le pôle N soient orientés dans des directions opposées par rapport à une direction radiale, dans lequel l'une parmi les première et deuxième faces d'aimant (37a, 37b) est pourvue du pôle S et l'autre parmi les première et deuxième faces d'aimant (37a, 37b) est pourvue du pôle N.

14. Unité d'entraînement, comprenant:
le moteur à entraînement synchrone (SG, SG2) selon l'une quelconque des revendications1 à 13; et
un dispositif de commande configuré pour alimenter vers l'enroulement (W) un courant d'entraînement qui comporte une composante de courant d'axe d.
